# EUROPEAN PATENT APPLICATION

(11) **EP 4 395 390 A1**
(43) Date of publication of application: **03.07.2024**
(21) Application number: 22882444.7
(22) Date of filing: 29.08.2022
(51) Int. Cl.: H04W 12/00, H04W 12/06, H04W 76/00

(54) **COMMUNICATION METHOD AND COMMUNICATION APPARATUS**

(30) Priority: 19.10.2021 CN 202111215362
(71) Applicant: Huawei Technologies Co., Ltd., Shenzhen, Guangdong 518129 (CN)
(72) Inventor: ZHANG, Chengchen, Shenzhen, Guangdong 518129 (CN); XING, Weijun, Shenzhen, Guangdong 518129 (CN)
(74) Representative: Goddar, Heinz J.
(86) International application number: PCT/CN2022/115592
(87) International publication number: WO 2023/065826

(57) **Abstract**

This application provides a communication method and apparatus. The method includes: receiving a NAS message sent by an urban air vehicle, and determining, based on subscription information that is of the urban air vehicle and that indicates that the urban air vehicle is allowed to execute an unmanned flight service or the urban air vehicle is not allowed to execute an unmanned flight service, to send a response message of rejecting the NAS message or a response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

## Description

### CROSS-REFERENCE TO RELATED APPLICATIONS

This application claims priority to Chinese Patent Application No. 202111215362.9, filed with the China National Intellectual Property Administration on October 19, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Traffic congestion is a common phenomenon in cities. Long-time commuting caused by traffic congestion on the ground causes serious economic losses. Urban air mobility (urban air mobility, UAM) is a possible urban transportation mode in the future, and can alleviate traffic congestion.

In urban air mobility, an urban air vehicle is used to fly inside a city or between cities to carry goods or people. The urban air vehicle may have a fixed route, and may also be parked at a specified parking station.

How to improve flight safety of an urban air vehicle is a problem to be solved at present.

### SUMMARY

Embodiments of this application provide a communication method and apparatus, to improve flight safety of an urban air vehicle.

According to a first aspect, an embodiment of this application provides a communication method. The method may be performed by a session management network element, a mobility management network element, a module (for example, a chip) used for a session management network element, or a module (for example, a chip) used for a mobility management network element. The method includes: receiving a non-access stratum NAS message from a terminal, where the terminal is an urban air vehicle; and sending, to the terminal based on subscription information of the terminal, a response message of rejecting or accepting the NAS message, where the subscription information indicates whether the terminal is allowed to execute an unmanned flight service.

According to the foregoing solution, if the urban air vehicle sends a NAS message, it is determined, based on the subscription information that is of the urban air vehicle and that indicates that the urban air vehicle is allowed to execute the unmanned flight service or the urban air vehicle is not allowed to execute the unmanned flight service, to send the response message of rejecting the NAS message or the response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, the subscription information of the terminal is requested from a subscription data management network element; and the subscription information from the subscription data management network element is received.

In an implementation method, the response message of rejecting the NAS message includes a cause value, and the cause value is that the unmanned flight service is prohibited.

According to the method, the terminal is notified of the rejection cause, so that the terminal no longer initiates the unmanned flight service, to help reduce signaling overheads of the terminal.

In an implementation method, it is determined, based on the subscription information, to reject or accept the NAS message.

In an implementation method, if the subscription information indicates that the terminal is not allowed to execute the unmanned flight service, it is determined to reject the NAS message.

In the foregoing method, if the subscription information indicates that the terminal is not allowed to execute the unmanned flight service, the NAS message is directly rejected, and there is no need to request the authentication and authorization server to authorize the unmanned flight service of the terminal, so that signaling overheads can be reduced.

In an implementation method, if the subscription information indicates that the terminal is allowed to execute the unmanned flight service, an authorization request message is sent to an authentication and authorization server, where the authorization request message is for requesting authorization of the unmanned flight service of the terminal; an authorization response message from the authentication and authorization server is received, where the authorization response message indicates that the authorization fails; and it is determined, based on the authorization response message, to reject the NAS message.

In an implementation method, if the subscription information indicates that the terminal is allowed to execute the unmanned flight service, an authorization request message is sent to an authentication and authorization server, where the authorization request message is for requesting authorization of the unmanned flight service of the terminal; an authorization response message is received from the authentication and authorization server, where the authorization response message indicates that the authorization succeeds; and it is determined, based on the authorization response message, to accept the NAS message.

According to the method, if it is determined that the unmanned flight service of the terminal is allowed, it is further needed to request the authentication and authorization server to authorize the unmanned flight service of the terminal. Only when the authentication and authorization server authorizes the unmanned flight service of the terminal, it is determined to accept the NAS message, in other words, allow the unmanned flight service of the terminal, to ensure flight safety of an urban air vehicle.

In an implementation method, the subscription information indicates whether the terminal is allowed to execute the unmanned flight service if a flight type of the terminal is a manned type.

In an implementation method, if the subscription information indicates that the terminal is not allowed to execute the unmanned flight service if the flight type of the terminal is the manned type, and the flight type of the terminal is the manned type, it is determined to reject the NAS message.

In the method, if the subscription information indicates that the terminal is not allowed to execute the unmanned flight service if the flight type of the terminal is the manned type, and the flight type of the terminal is the manned type, the NAS message is directly rejected, and there is no need to request the authentication and authorization server to authorize the unmanned flight service of the terminal, so that signaling overheads can be reduced.

In an implementation method, if the subscription information indicates that the terminal is allowed to execute the unmanned flight service if the flight type of the terminal is the manned type, and the flight type of the terminal is the manned type, an authorization request message is sent to an authentication and authorization server, where the authorization request message is for requesting authorization of the unmanned flight service of the terminal; an authorization response message from the authentication and authorization server is received, where the authorization response message indicates that the authorization fails; and it is determined, based on the authorization response message, to reject the NAS message.

In an implementation method, if the subscription information indicates that the terminal is allowed to execute the unmanned flight service if the flight type of the terminal is the manned type, and the flight type of the terminal is the manned type, an authorization request message is sent to an authentication and authorization server, where the authorization request message is for requesting authorization of the unmanned flight service of the terminal; an authorization response message is received from the authentication and authorization server, where the authorization response message indicates that the authorization succeeds; and it is determined, based on the authorization response message, to accept the NAS message.

According to the method, if it is determined that the unmanned flight service of the terminal is allowed, it is further needed to request the authentication and authorization server to authorize the unmanned flight service of the terminal. Only when the authentication and authorization server authorizes the unmanned flight service of the terminal, it is determined to accept the NAS message, in other words, allow the unmanned flight service of the terminal, to ensure flight safety of an urban air vehicle.

In an implementation method, the NAS message is a session management request message, and the session management request message is for requesting establishment of a session for the unmanned flight service.

According to a second aspect, an embodiment of this application provides a communication method. The method may be performed by a session management network element or a module (for example, a chip) used for a session management network element. The method includes: receiving a session management request message and indication information, where the session management request message is for requesting establishment of a session for an unmanned flight service, the indication information indicates whether a terminal is allowed to execute the unmanned flight service, and the terminal is an urban air vehicle; and sending, based on the indication information, a response message of rejecting or accepting the session management request message to the terminal.

According to the foregoing solution, if the urban air vehicle sends a session management request message, it may be determined, based on the indication information indicating that the urban air vehicle is allowed to execute the unmanned flight service or the urban air vehicle is not allowed to execute the unmanned flight service, to send the response message of rejecting the session management request message or the response message of accepting the session management request message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, the response message of rejecting the session management request message includes a cause value, and the cause value is that the unmanned flight service is prohibited.

According to the method, the terminal is notified of the rejection cause, so that the terminal no longer initiates the unmanned flight service, to help reduce signaling overheads of the terminal.

In an implementation method, it is determined, based on the indication information, to reject or accept the session management request message.

In an implementation method, if the indication information indicates that the terminal is not allowed to execute the unmanned flight service, it is determined to reject the session management request message.

In an implementation method, if the indication information indicates that the terminal is allowed to execute the unmanned flight service, an authorization request message is sent to an authentication and authorization server, where the authorization request message is for requesting authorization of the unmanned flight service of the terminal; an authorization response message from the authentication and authorization server is received, where the authorization response message indicates that the authorization fails; and it is determined, based on the authorization response message, to reject the session management request message.

In an implementation method, if the indication information indicates that the terminal is allowed to execute the unmanned flight service, an authorization request message is sent to an authentication and authorization server, where the authorization request message is for requesting authorization of the unmanned flight service of the terminal; an authorization response message is received from the authentication and authorization server, where the authorization response message indicates that the authorization succeeds; and it is determined, based on the authorization response message, to accept the session management request message.

According to the method, if it is determined that the unmanned flight service of the terminal is allowed, it is further needed to request the authentication and authorization server to authorize the unmanned flight service of the terminal. Only when the authentication and authorization server authorizes the unmanned flight service of the terminal, it is determined to accept the session management request message, in other words, allow the unmanned flight service of the terminal, to ensure flight safety of an urban air vehicle.

In an implementation method, the indication information indicates whether the terminal is allowed to execute the unmanned flight service if a flight type of the terminal is a manned type.

In an implementation method, if the indication information indicates that the terminal is not allowed to execute the unmanned flight service if the flight type of the terminal is the manned type, and the flight type of the terminal is the manned type, it is determined to reject the session management request message.

In the method, if the subscription information indicates that the terminal is not allowed to execute the unmanned flight service if the flight type of the terminal is the manned type, and the flight type of the terminal is the manned type, the session management request message is directly rejected, and there is no need to request the authentication and authorization server to authorize the unmanned flight service of the terminal, so that signaling overheads can be reduced.

In an implementation method, if the indication information indicates that the terminal is allowed to execute the unmanned flight service if the flight type of the terminal is the manned type, and the flight type of the terminal is the manned type, an authorization request message is sent to an authentication and authorization server, where the authorization request message is for requesting authorization of the unmanned flight service of the terminal; an authorization response message from the authentication and authorization server is received, where the authorization response message indicates that the authorization fails; and it is determined, based on the authorization response message, to reject the session management request message.

In an implementation method, if the indication information indicates that the terminal is allowed to execute the unmanned flight service if the flight type of the terminal is the manned type, and the flight type of the terminal is the manned type, an authorization request message is sent to an authentication and authorization server, where the authorization request message is for requesting authorization of the unmanned flight service of the terminal; an authorization response message is received from the authentication and authorization server, where the authorization response message indicates that the authorization succeeds; and it is determined, based on the authorization response message, to accept the session management request message.

According to the method, if it is determined that the unmanned flight service of the terminal is allowed, it is further needed to request the authentication and authorization server to authorize the unmanned flight service of the terminal. Only when the authentication and authorization server authorizes the unmanned flight service of the terminal, it is determined to accept the session management request message, in other words, allow the unmanned flight service of the terminal, to ensure flight safety of an urban air vehicle.

In an implementation method, the session management request message and the indication information from a mobility management network element are received.

According to a third aspect, an embodiment of this application provides a communication method. The method may be performed by a session management network element, a mobility management network element, a module (for example, a chip) used for a session management network element, or a module (for example, a chip) used for a mobility management network element. The method includes: sending an authentication and authorization request message to an authentication and authorization server, where the authentication and authorization request message is for requesting authentication and authorization of a terminal, and the terminal is an urban air vehicle; receiving an authentication and authorization response message from the authentication and authorization server, where the authentication and authorization response message includes indication information, and the indication information indicates whether the terminal is allowed to execute an unmanned flight service; receiving a non-access stratum NAS message from the terminal; and sending, to the terminal based on the indication information, a response message of rejecting or accepting the NAS message.

According to the foregoing solution, if the urban air vehicle sends a NAS message, it is determined, based on first indication information that is from the authentication and authorization server and that indicates that the urban air vehicle is allowed to execute the unmanned flight service or the urban air vehicle is not allowed to execute the unmanned flight service, to send the response message of rejecting the NAS message or the response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, the response message of rejecting the NAS message includes a cause value, and the cause value is that the unmanned flight service is prohibited.

According to the method, the terminal is notified of the rejection cause, so that the terminal no longer initiates the unmanned flight service, to help reduce signaling overheads of the terminal.

In an implementation method, it is determined, based on the indication information, to reject or accept the NAS message.

In an implementation method, if the indication information indicates that the terminal is not allowed to execute the unmanned flight service, it is determined to reject the NAS message.

In an implementation method, if the indication information indicates that the terminal is allowed to execute the unmanned flight service, an authorization request message is sent to the authentication and authorization server, where the authorization request message is for requesting authorization of the unmanned flight service of the terminal; an authorization response message from the authentication and authorization server is received, where the authorization response message indicates that the authorization fails; and it is determined, based on the authorization response message, to reject the NAS message.

In an implementation method, if the indication information indicates that the terminal is allowed to execute the unmanned flight service, an authorization request message is sent to the authentication and authorization server, where the authorization request message is for requesting authorization of the unmanned flight service of the terminal; an authorization response message is received from the authentication and authorization server, where the authorization response message indicates that the authorization succeeds; and it is determined, based on the authorization response message, to accept the NAS message.

According to the method, if it is determined that the unmanned flight service of the terminal is allowed, it is further needed to request the authentication and authorization server to authorize the unmanned flight service of the terminal. Only when the authentication and authorization server authorizes the unmanned flight service of the terminal, it is determined to accept the NAS message, in other words, allow the unmanned flight service of the terminal, to ensure flight safety of an urban air vehicle.

In an implementation method, the indication information indicates whether the terminal is allowed to execute the unmanned flight service if a flight type of the terminal is a manned type.

In an implementation method, if the indication information indicates that the terminal is not allowed to execute the unmanned flight service if the flight type of the terminal is the manned type, and the flight type of the terminal is the manned type, it is determined to reject the NAS message.

In an implementation method, if the indication information indicates that the terminal is allowed to execute the unmanned flight service if the flight type of the terminal is the manned type, and the flight type of the terminal is the manned type, an authorization request message is sent to the authentication and authorization server, where the authorization request message is for requesting authorization of the unmanned flight service of the terminal; an authorization response message from the authentication and authorization server is received, where the authorization response message indicates that the authorization fails; and it is determined, based on the authorization response message, to reject the NAS message.

In an implementation method, if the indication information indicates that the terminal is allowed to execute the unmanned flight service if the flight type of the terminal is the manned type, and the flight type of the terminal is the manned type, an authorization request message is sent to the authentication and authorization server, where the authorization request message is for requesting authorization of the unmanned flight service of the terminal; an authorization response message is received from the authentication and authorization server, where the authorization response message indicates that the authorization succeeds; and it is determined, based on the authorization response message, to accept the NAS message.

According to the method, if it is determined that the unmanned flight service of the terminal is allowed, it is further needed to request the authentication and authorization server to authorize the unmanned flight service of the terminal. Only when the authentication and authorization server authorizes the unmanned flight service of the terminal, it is determined to accept the NAS message, in other words, allow the unmanned flight service of the terminal, to ensure flight safety of an urban air vehicle.

In an implementation method, the NAS message is a session management request message, and the session management request message is for requesting establishment of a session for the unmanned flight service.

According to a fourth aspect, an embodiment of this application provides a communication apparatus. The apparatus may be a session management network element, a mobility management network element, a module (for example, a chip) used for a session management network element, or a module (for example, a chip) used for a mobility management network element. The apparatus has a function of implementing any implementation method of the first aspect or any implementation method of the third aspect. This function may be implemented by using hardware, or may be implemented by executing corresponding software by hardware. The hardware or the software includes one or more modules corresponding to the foregoing functions.

According to a fifth aspect, an embodiment of this application provides a communication apparatus. The apparatus may be a session management network element or a module (for example, a chip) used for a session management network element. The apparatus has a function of implementing any implementation method of the second aspect. This function may be implemented by using hardware, or may be implemented by executing corresponding software by hardware. The hardware or the software includes one or more modules corresponding to the foregoing functions.

According to a sixth aspect, an embodiment of this application provides a communication apparatus, including a processor and a memory. The memory is configured to store computer instructions. When the apparatus runs, the processor executes the computer instructions stored in the memory, so that the apparatus performs any implementation method in the first aspect to the third aspect.

According to a seventh aspect, an embodiment of this application provides a communication apparatus, including units or means (means) configured to perform the steps of any implementation method in the first aspect to the third aspect.

According to an eighth aspect, an embodiment of this application provides a communication apparatus, including a processor and an interface circuit. The processor is configured to communicate with another apparatus through the interface circuit, and perform any implementation method in the first aspect to the third aspect. There are one or more processors.

According to a ninth aspect, an embodiment of this application provides a communication apparatus, including a processor coupled to a memory. The processor is configured to invoke a program stored in the memory, to perform any implementation method in the first aspect to the third aspect. The memory may be located inside or outside the apparatus. In addition, there may be one or more processors.

According to a tenth aspect, an embodiment of this application further provides a computer-readable storage medium, where the computer-readable storage medium stores instructions, and when the instructions are run on a communication apparatus, any implementation method in the first aspect to the third aspect is performed.

According to an eleventh aspect, an embodiment of this application further provides a computer program product. The computer program product includes a computer program or instructions. When the computer program or the instructions are run by a communication apparatus, any implementation method in the first aspect to the third aspect is performed.

According to a twelfth aspect, an embodiment of this application further provides a chip system, including a processor, configured to perform any implementation method in the first aspect to the third aspect.

### BRIEF DESCRIPTION OF DRAWINGS

FIG. 1(a) is a schematic diagram of a 5G network architecture based on a service-based architecture;
FIG. 1(b) is a schematic diagram of a 5G network architecture based on a point-to-point interface;
FIG. 2(a) is a schematic flowchart of a communication method according to an embodiment of this application;
FIG. 2(b) is a schematic flowchart of a communication method according to an embodiment of this application;
FIG. 2(c) is a schematic flowchart of a communication method according to an embodiment of this application;
FIG. 2(d) is a schematic flowchart of a communication method according to an embodiment of this application;
FIG. 2(e) is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic diagram of a communication apparatus according to an embodiment of this application; and
FIG. 8 is a schematic diagram of a communication apparatus according to an embodiment of this application.

### DESCRIPTION OF EMBODIMENTS

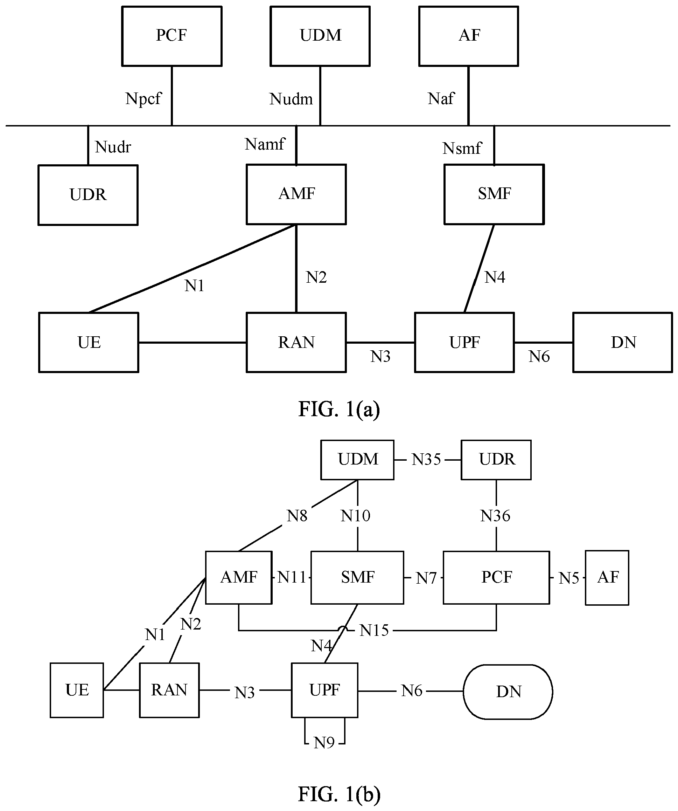

FIG. 1(a) is a schematic diagram of a 5G network architecture based on a service-based architecture. A 5th generation (the 5th generation, 5G) network architecture shown in FIG. 1(a) may include a data network (data network, DN) and one or more of the following network elements: a unified data management (unified data management, UDM) network element, a unified data repository (unified data repository, UDR) network element, a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a radio access network (radio access network, RAN) device, and an uncrewed aerial system (uncrewed aerial system, UAS) service supplier (UAS service supplier, USS) server (not shown in the figure and referred to as a USS for short below).

The radio access network device may be a base station (base station), an evolved base station (evolved NodeB, eNodeB), a transmission-reception point (transmission reception point, TRP), a next generation base station (next generation NodeB, gNB) in a 5G mobile communication system, a next generation base station in a 6G mobile communication system, a base station in a future mobile communication system, an access node in a wireless fidelity (wireless fidelity, Wi-Fi) system, or the like; or may be a module or unit that implements some functions of a base station, for example, may be a central unit (central unit, CU), or may be a distributed unit (distributed unit, DU). The radio access network device may be a macro base station, or may be a micro base station or an indoor base station, or may be a relay node or a donor node. A specific technology and a specific device form that are used by the radio access network device are not limited in embodiments of this application. For ease of description, in embodiments of this application, an example in which a base station is used as a radio access network device is used for description.

A terminal communicating with the RAN may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of Things (internet of things, IOT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an urban air vehicle (for example, an unmanned aerial vehicle or a helicopter), a ship, a robot, a robot arm, a smart home device, or the like. In embodiments of this application, an example in which the terminal is an urban air vehicle is used for description. The urban air vehicle is a terminal that accesses a network, and may be, for example, urban air mobility UAM vehicle with a universal subscriber identity module (universal subscriber identity module, USIM) loaded.

The base station and the terminal may be at fixed locations, or may be movable. The base station and the terminal may be deployed on land, including indoor, outdoor, handheld, or vehicle-mounted, or may be deployed on water, or may be deployed on an airplane, a balloon, or an artificial satellite in the air. Application scenarios of the base station and the terminal are not limited in embodiments of this application.

The AMF network element has functions such as mobility management, access authentication/authorization, and the like. In addition, the AMF network element is further responsible for transferring user policies between the terminal and the PCF.

The SMF network element has functions such as session management, execution of a control policy delivered by a PCF, UPF selection, terminal Internet Protocol (internet protocol, IP) address allocation, and the like.

The UPF network element is used as an interface to a data network, and has functions such as user plane data forwarding, session/flow-level charging statistics, bandwidth restriction, and the like.

The UDM network element has functions such as subscription data management and user access authorization.

The UDR has a function of accessing subscription data, policy data, and application data.

The NEF network element is configured to support capability and event exposure.

The AF network element transfers a requirement of an application side for a network side, for example, a QoS requirement or a user status event subscription. The AF may be a third-party functional entity, or may be an application server deployed by an operator.

The PCF network element has policy control functions such as session/service flow-level charging, QoS bandwidth guarantee and mobility management, terminal policy decision, and the like.

The USS is configured to provide a service for safe and effective use of air space by an urban air vehicle, and is responsible for authentication and authorization of the urban air vehicle, flight plan authorization, command and control (command and control, C2) communication authorization, unmanned flight service authorization, identification and tracking of the urban air vehicle, and the like. The C2 communication is communication between a controller and an urban air vehicle, and the C2 communication is used for the controller to send a control message or a command message to the urban air vehicle.

The DN is a network located outside an operator network. The operator network may access a plurality of DNs, and a plurality of services may be deployed on the DN, to provide a data service and/or a voice service for a terminal. For example, the DN is a private network of a smart factory, a sensor installed in a workshop in the smart factory may be a terminal, a control server of the sensor is deployed in the DN, and the control server may provide a service for the sensor. The sensor may communicate with the control server, obtain an instruction of the control server, and transmit acquired sensor data to the control server according to the instruction. For another example, the DN is an internal office network of a company, a mobile phone or a computer of an employee of the company may be a terminal, and the mobile phone or the computer of the employee may access information, data resources, and the like on the internal office network of the company.

Npcf, Nudr, Nudm, Naf, Namf, and Nsmf in FIG. 1(a) are service-based interfaces provided by the PCF, the UDR, the UDM, the AF, the AMF, and the SMF respectively, and are configured to invoke corresponding service-based operations. N1, N2, N3, N4, and N6 are interface sequence numbers. For meanings of such interface sequence numbers, refer to descriptions in FIG. 1(b).

FIG. 1(b) is a schematic diagram of a 5G network architecture based on a point-to-point interface. For descriptions of functions of network elements, refer to the descriptions of the functions of the corresponding network elements in FIG. 1(a). Details are not described again. A main difference between FIG. 1(b) and FIG. 1(a) lies in that an interface between control plane network elements in FIG. 1(a) is a service-based interface, and an interface between control plane network elements in FIG. 1(b) is a point-to-point interface.

In the architecture shown in FIG. 1(b), names and functions of interfaces between network elements are as follows:
(1) N1: It is an interface between the AMF and the terminal, and may be used to transfer a QoS control rule and the like to the terminal.
(2) N2: It is an interface between the AMF and the RAN, and may be used to transfer radio bearer control information and the like from a core network side to the RAN.
(3) N3: It is an interface between the RAN and the UPF, and is mainly used to transmit uplink and downlink user plane data between the RAN and the UPF.
(4) N4: It is an interface between the SMF and the UPF, and may be used to transmit information between a control plane and a user plane, including delivery of a forwarding rule of the control plane for the user plane, a QoS control rule, a traffic statistics collection rule, and the like, and reporting of information on the user plane.
(5) N5: It is an interface between the AF and the PCF, and may be used to deliver an application service request and report a network event.
(6) N6: It is an interface between the UPF and a DN, and is used to transmit uplink and downlink user data flows between the UPF and the DN.
(7) N7: It is an interface between the PCF and the SMF, and may be used to deliver a protocol data unit (protocol data unit, PDU) session granularity and a service data flow granularity control policy.
(8) N8: It is an interface between the AMF and the UDM, and may be used by the AMF to obtain access and mobility management related subscription data and authentication data from the UDM, and register current mobility management related information and the like of the terminal with the UDM.
(9) N9: It is a user plane interface between UPFs, and is configured to transmit uplink and downlink user data flows between UPFs.
(10) N10: It is an interface between the SMF and the UDM, and may be used by the SMF to obtain session management related subscription data from the UDM, and register current session related information and the like of the terminal with the UDM.
(11) N11: It is an interface between the SMF and the AMF, and may be used to transfer PDU session tunnel information between the RAN and the UPF, transfer a control message sent to the terminal, transfer radio resource control information sent to the RAN, and the like.
(12) N15: It is an interface between the PCF and the AMF, and may be used to deliver a terminal policy and an access control related policy.
(13) N35: It is an interface between the UDM and the UDR, and may be used by the UDM to obtain subscription data information of a user from the UDR.
(14) N36: It is an interface between the PCF and the UDR, and may be used by the PCF to obtain policy-related subscription data and application data-related information from the UDR.

It may be understood that the network element or the function may be a network element in a hardware device, or may be a software function running on dedicated hardware, or may be an instantiated virtualization function on a platform (for example, a cloud platform). Optionally, the network element or the function may be implemented by one device, or may be jointly implemented by a plurality of devices, or may be a functional module in one device. This is not specifically limited in embodiments of this application.

The subscription data management network element, the mobility management network element, the session management network element, and the authentication and authorization server in this application may be respectively the UDM, the AMF, the SMF, and the USS in FIG. 1(a) or FIG. 1(b), or may be network elements that have functions of the UDM, the AMF, the SMF, and the USS in a future communication network such as a 6G network. This is not limited in this application. In embodiments of this application, an example in which the UDM, the AMF, the SMF, and the USS are respectively a subscription data management network element, a mobility management network element, a session management network element, and an authentication and authorization server is used for description.

It should be noted that names of the network elements and the communication interfaces between the network elements in FIG. 1(a) or FIG. 1(b) are briefly described by using an example specified in a current protocol, but this is not limited to that embodiments of this application can be applied only to a currently known communication system. Therefore, standard names that appear when a current protocol is used as an example for description are function descriptions. A specific name of a network element, an interface, signaling, or the like is not limited in this application, and only represents a function of the network element, the interface, or the signaling, and may be correspondingly extended to another system, for example, 2G, 3G, 4G, 5G, or a future communication system.

The network architecture to which embodiments of this application shown in FIG. 1(a) or FIG. 1(b) can be applied is merely an example for description, and the network architecture applicable to embodiments of this application is not limited thereto. Any network architecture that can implement functions of the foregoing network elements is applicable to embodiments of this application.

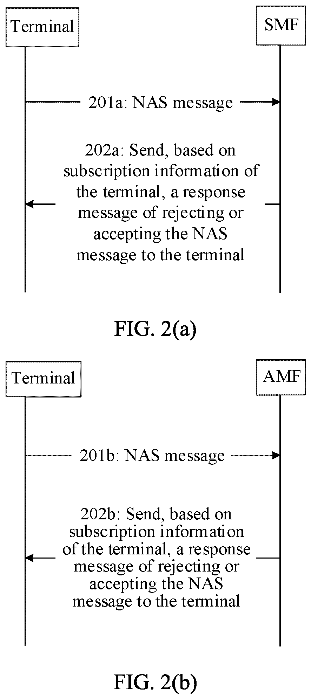

To improve flight safety of an urban air vehicle, an embodiment of this application provides a communication method. Refer to FIG. 2(a). The method includes the following steps.

Step 201a: A terminal sends a non-access stratum (non-access stratum, NAS) message to an SMF, and correspondingly, the SMF receives the NAS message.

The terminal is an urban air vehicle.

In an implementation method, the terminal forwards the NAS message to the SMF through an AMF, where the NAS message is included in different messages between the terminal and the AMF and between the AMF and the SMF.

In an implementation method, the NAS message is a session management request message, and the session management request message is for requesting establishment of a session for the unmanned flight service. For example, the session management request message is a session establishment request message, and the session establishment request message is for requesting establishment of a new session for the unmanned flight service. For another example, the session management request message is a session modification request message. The session modification request message is for requesting establishment of an existing session to be used for the unmanned flight service, or may be understood as modifying an existing session to be used for the unmanned flight service. A function and an implementation method of the session management request message herein are also applicable to a session management request message in another embodiment of this application. Details are not described below.

Step 202a: The SMF sends, to the terminal based on subscription information of the terminal, a response message of rejecting or accepting the NAS message. Correspondingly, the terminal receives the response message of rejecting or accepting the NAS message.

The subscription information indicates whether the terminal is allowed to execute the unmanned flight service. Specifically, the subscription information indicates that the terminal is allowed to execute the unmanned flight service, or indicates that the terminal is not allowed to execute the unmanned flight service.

Optionally, the subscription information includes indication information, and the indication information indicates whether the terminal is allowed to execute the unmanned flight service.

According to the foregoing solution, if the urban air vehicle sends a NAS message, the SMF determines, based on the subscription information that is of the urban air vehicle and that indicates that the urban air vehicle is allowed to execute the unmanned flight service or the urban air vehicle is not allowed to execute the unmanned flight service, to send the response message of rejecting the NAS message or the response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, after step 201a and before step 202a, the SMF may further request the subscription information of the terminal from a UDM, and then receive the subscription information from the UDM. In other words, the SMF obtains the subscription information of the terminal from the UDM.

In an implementation method, if the SMF sends the response message of rejecting the NAS message to the terminal in step 202a, the response message of rejecting the NAS message may carry a cause value, and the cause value is that the unmanned flight service is prohibited. The terminal is notified of the rejection cause, so that the terminal no longer initiates the unmanned flight service, to help reduce signaling overheads of the terminal.

In an implementation method, before step 202a, the SMF may further determine, based on the subscription information, whether to reject the NAS message or accept the NAS message.

For example, if the subscription information of the terminal indicates that the terminal is not allowed to execute the unmanned flight service, the SMF determines to reject the NAS message. In the method, if the subscription information of the terminal indicates that the terminal is not allowed to execute the unmanned flight service, the SMF may directly reject the NAS message, and does not need to request a USS to authorize the unmanned flight service of the terminal, so that signaling overheads can be reduced.

For another example, if the subscription information of the terminal indicates that the terminal is allowed to execute the unmanned flight service, the SMF may further send an authorization request message to the USS, where the authorization request message is for requesting authorization of the unmanned flight service of the terminal. The SMF then receives an authorization response message from the USS. If the authorization response message indicates that the authorization fails, the SMF determines, based on the authorization response message, to reject the NAS message. If the authorization response message indicates that the authorization succeeds, the SMF determines, based on the authorization response message, to accept the NAS message. According to the method, if the SMF allows the unmanned flight service of the terminal, the SMF further needs to request the USS to authorize the unmanned flight service of the terminal. Only when the USS authorizes the unmanned flight service of the terminal, the SMF determines to accept the NAS message, in other words, allows the unmanned flight service of the terminal, to ensure flight safety of an urban air vehicle.

In an implementation method, in this embodiment of this application, the unmanned flight service of the terminal may be further controlled with reference to a flight type of the terminal. The flight type may be a manned type or an unmanned type. For example, the subscription information of the terminal in step 202a indicates whether the terminal is allowed to execute the unmanned flight service if the flight type of the terminal is the manned type.

For example, if the subscription information of the terminal indicates that the terminal is not allowed to execute the unmanned flight service if the flight type of the terminal is the manned type, and the SMF determines that the flight type of the terminal is the manned type, the SMF determines to reject the NAS message. In the method, the SMF may directly reject the NAS message, and does not need to request the USS to authorize the unmanned flight service of the terminal, so that signaling overheads can be reduced.

For another example, if the subscription information of the terminal indicates that the terminal is allowed to execute the unmanned flight service if the flight type of the terminal is the manned type, and the SMF determines that the flight type of the terminal is the manned type, the SMF may further send an authorization request message to the USS, where the authorization request message is for requesting authorization of the unmanned flight service of the terminal. The SMF then receives an authorization response message from the USS. If the authorization response message indicates that the authorization fails, the SMF determines, based on the authorization response message, to reject the NAS message. If the authorization response message indicates that the authorization succeeds, the SMF determines, based on the authorization response message, to accept the NAS message. According to the method, if the SMF allows the unmanned flight service of the terminal, the SMF further needs to request the USS to authorize the unmanned flight service of the terminal. Only when the USS authorizes the unmanned flight service of the terminal, the SMF determines to accept the NAS message, in other words, allows the unmanned flight service of the terminal, to ensure flight safety of an urban air vehicle.

For another example, if the SMF determines that the flight type of the terminal is the unmanned type, the SMF may further send an authorization request message to the USS, where the authorization request message is for requesting authorization of the unmanned flight service of the terminal. The SMF then receives an authorization response message from the USS. If the authorization response message indicates that the authorization fails, the SMF determines, based on the authorization response message, to reject the NAS message. If the authorization response message indicates that the authorization succeeds, the SMF determines, based on the authorization response message, to accept the NAS message. According to the method, if the SMF allows the unmanned flight service of the terminal, the SMF further needs to request the USS to authorize the unmanned flight service of the terminal. Only when the USS authorizes the unmanned flight service of the terminal, the SMF determines to accept the NAS message, in other words, allows the unmanned flight service of the terminal, to ensure flight safety of an urban air vehicle. In the method, if the flight type of the terminal is the unmanned type, the subscription information of the terminal may not need to be referred to.

To improve flight safety of an urban air vehicle, an embodiment of this application provides a communication method. Refer to FIG. 2(b). The method includes the following steps.

Step 201b: A terminal sends a NAS message to an AMF, and correspondingly, the AMF receives the NAS message.

The terminal is an urban air vehicle.

In an implementation method, the NAS message includes a session management request message and indication information, and the indication information indicates that the session management request message is for requesting establishment of a session for an unmanned flight service. After receiving the NAS message, the AMF may determine, based on the indication information, that the session management request message is for requesting establishment of the session for the unmanned flight service.

Step 202b: The AMF sends, to the terminal based on subscription information of the terminal, a response message of rejecting or accepting the NAS message. Correspondingly, the terminal receives the response message of rejecting or accepting the NAS message.

Because the AMF learns, based on the indication information, that the session management request message in the NAS message is for requesting establishment of the session for the unmanned flight service, the AMF may trigger, based on the indication information, step 202b.

The subscription information indicates whether the terminal is allowed to execute the unmanned flight service. Optionally, the subscription information includes indication information, and the indication information indicates whether the terminal is allowed to execute the unmanned flight service.

According to the foregoing solution, if the urban air vehicle sends a NAS message, the AMF determines, based on the subscription information that is of the urban air vehicle and that indicates that the urban air vehicle is allowed to execute the unmanned flight service or the urban air vehicle is not allowed to execute the unmanned flight service, to send the response message of rejecting the NAS message or the response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, in the terminal registration procedure before step 201b, the AMF may request the subscription information of the terminal from a UDM, and then receive the subscription information from the UDM. In other words, the AMF obtains the subscription information of the terminal from the UDM.

In an implementation method, if the AMF sends the response message of rejecting the NAS message to the terminal in step 202b, the response message of rejecting the NAS message may carry a cause value, and the cause value is that the unmanned flight service is prohibited. The terminal is notified of the rejection cause, so that the terminal no longer initiates the unmanned flight service, to help reduce signaling overheads of the terminal.

In an implementation method, before step 202b, the AMF may further determine, based on the subscription information, whether to reject the NAS message or accept the NAS message. A method for determining, by the AMF, whether to reject the NAS message or accept the NAS message is similar to the method for determining, by the SMF, whether to reject the NAS message or accept the NAS message in the embodiment corresponding to FIG. 2(a). For details, refer to the foregoing descriptions.

In an implementation method, in this embodiment of this application, the unmanned flight service of the terminal may be further controlled with reference to a flight type of the terminal. The flight type may be a manned type or an unmanned type. For example, the subscription information of the terminal in step 202b indicates whether the terminal is allowed to execute the unmanned flight service if the flight type of the terminal is the manned type. A method for determining, by the AMF, whether to reject the NAS message or accept the NAS message is similar to the method for determining, by the SMF, whether to reject the NAS message or accept the NAS message in the embodiment corresponding to FIG. 2(a). For details, refer to the foregoing descriptions.

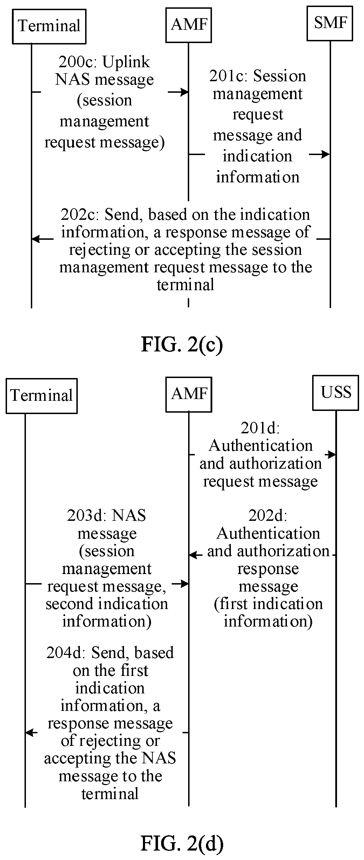

To improve flight safety of an urban air vehicle, an embodiment of this application provides a communication method. Refer to FIG. 2(c). The method includes the following steps.

Step 200c: A terminal sends an uplink NAS message to an AMF, where the uplink NAS message includes a session management request message, and correspondingly, the AMF receives the uplink NAS message.

The terminal is an urban air vehicle.

The session management request message is sent by the terminal to an SMF, and the session management request message is for requesting establishment of a session for an unmanned flight service.

Step 201c: The AMF sends a session management request message and indication information to the SMF, and correspondingly, the SMF receives the session management request message and the indication information.

The AMF receives the session management request message, but the AMF cannot parse the session management request message. Therefore, the AMF does not learn that the session management request message is for requesting establishment of the session for the unmanned flight service. In addition, the AMF may learn whether the terminal is allowed to execute the unmanned flight service. For example, the AMF may obtain subscription information of the terminal, and learn, based on the subscription information of the terminal, whether the terminal is allowed to execute the unmanned flight service. Because the AMF does not learn that the session management request message is for requesting establishment of the session for the unmanned flight service, the AMF cannot determine whether to reject the session management request message or accept the session management request message. The AMF may send the session management request to the SMF, and further send indication information to the SMF. The indication information indicates whether the terminal is allowed to execute the unmanned flight service. Because the SMF can parse the session management request message, the SMF may learn that the session management request message is for requesting establishment of the session for the unmanned flight service, so that the SMF can determine, based on the indication information, whether to reject the session management request message or accept the session management request message.

Step 202c: The SMF sends, based on the indication information, a response message of rejecting or accepting the session management request message to the terminal. Correspondingly, the terminal receives the response message of rejecting or accepting the session management request message.

According to the foregoing solution, if the urban air vehicle sends a session management request message, the SMF may determine, based on the indication information that is from the AMF and that indicates that the urban air vehicle is allowed to execute the unmanned flight service or the urban air vehicle is not allowed to execute the unmanned flight service, to send the response message of rejecting the session management request message or the response message of accepting the session management request message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, if the SMF sends the response message of rejecting the session management request message to the terminal in step 202c, the response message of rejecting the session management request message may carry a cause value, and the cause value is that the unmanned flight service is prohibited. The terminal is notified of the rejection cause, so that the terminal no longer initiates the unmanned flight service, to help reduce signaling overheads of the terminal.

In an implementation method, before step 202c, the SMF may further determine, based on the received indication information, whether to reject the session management request message or accept the session management request message. A method for determining, by the SMF, whether to reject the session management request message or accept the session management request message is similar to the method for determining, by the SMF, whether to reject the NAS message or accept the NAS message in the embodiment corresponding to FIG. 2(a). For details, refer to the foregoing descriptions.

In an implementation method, in this embodiment of this application, the unmanned flight service of the terminal may be further controlled with reference to a flight type of the terminal. The flight type may be a manned type or an unmanned type. For example, the indication information in step 202c indicates whether the terminal is allowed to execute the unmanned flight service if the flight type of the terminal is the manned type. A method for determining, by the SMF, whether to reject the session management request message or accept the session management request message is similar to the method for determining, by the SMF, whether to reject the NAS message or accept the NAS message in the embodiment corresponding to FIG. 2(a). For details, refer to the foregoing descriptions.

To improve flight safety of an urban air vehicle, an embodiment of this application provides a communication method. Refer to FIG. 2(d). The method includes the following steps.

Step 201d: An AMF sends an authentication and authorization request message to a USS. Correspondingly, the USS receives the authentication and authorization request message.

The authentication and authorization request message is for requesting authentication and authorization of a terminal, and the terminal is an urban air vehicle.

Step 202d: The USS sends an authentication and authorization response message to the AMF. Correspondingly, the AMF receives the authentication and authorization response message.

The authentication and authorization response message includes first indication information, and the first indication information indicates whether the terminal is allowed to execute an unmanned flight service.

Step 203d: A terminal sends a NAS message to the AMF, and correspondingly, the AMF receives the NAS message.

The terminal is an urban air vehicle.

In an implementation method, the NAS message includes a session management request message and second indication information, and the second indication information indicates that the session management request message is for requesting establishment of a session for the unmanned flight service. After receiving the NAS message, the AMF may determine, based on the second indication information, that the session management request message is for requesting establishment of the session for the unmanned flight service.

Step 204d: The AMF sends, to the terminal based on the first indication information, a response message of rejecting or accepting the NAS message. Correspondingly, the terminal receives the response message of rejecting or accepting the NAS message.

Because the AMF learns, based on the second indication information, that the session management request message in the NAS message is for requesting establishment of the session for the unmanned flight service, the AMF may trigger, based on the second indication information, step 204d.

According to the foregoing solution, if the urban air vehicle sends a NAS message, the AMF determines, based on first indication information that is from the USS and that indicates that the urban air vehicle is allowed to execute the unmanned flight service or the urban air vehicle is not allowed to execute the unmanned flight service, to send the response message of rejecting the NAS message or the response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, if the AMF sends the response message of rejecting the NAS message to the terminal in step 204d, the response message of rejecting the NAS message may carry a cause value, and the cause value is that the unmanned flight service is prohibited. The terminal is notified of the rejection cause, so that the terminal no longer initiates the unmanned flight service, to help reduce signaling overheads of the terminal.

In an implementation method, before step 204d, the AMF may further determine, based on the first indication information, whether to reject the NAS message or accept the NAS message. A method for determining, by the AMF, whether to reject the NAS message or accept the NAS message is similar to the method for determining, by the SMF, whether to reject the NAS message or accept the NAS message in the embodiment corresponding to FIG. 2(a). For details, refer to the foregoing descriptions.

In an implementation method, in this embodiment of this application, the unmanned flight service of the terminal may be further controlled with reference to a flight type of the terminal. The flight type may be a manned type or an unmanned type. For example, the first indication information in step 204d indicates whether the terminal is allowed to execute the unmanned flight service if the flight type of the terminal is the manned type. A method for determining, by the AMF, whether to reject the NAS message or accept the NAS message is similar to the method for determining, by the SMF, whether to reject the NAS message or accept the NAS message in the embodiment corresponding to FIG. 2(a). For details, refer to the foregoing descriptions.

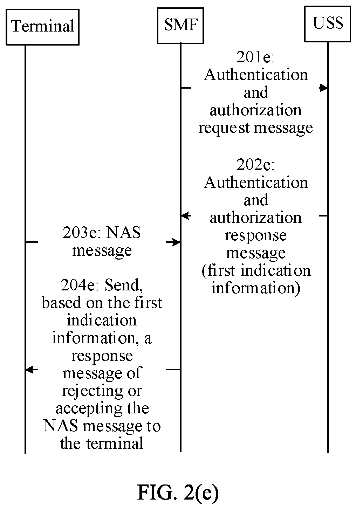

To improve flight safety of an urban air vehicle, an embodiment of this application provides a communication method. Refer to FIG. 2(e). The method includes the following steps.

Step 201e: An SMF sends an authentication and authorization request message to a USS. Correspondingly, the USS receives the authentication and authorization request message.

The authentication and authorization request message is for requesting authentication and authorization of a terminal, and the terminal is an urban air vehicle.

Step 202e: The USS sends an authentication and authorization response message to the SMF. Correspondingly, the SMF receives the authentication and authorization response message.

The authentication and authorization response message includes first indication information, and the first indication information indicates whether the terminal is allowed to execute an unmanned flight service.

Step 203e: A terminal sends a NAS message to the SMF, and correspondingly, the SMF receives the NAS message.

In an implementation method, the terminal sends the NAS message to an AMF, and then the AMF sends the NAS message to the SMF. The terminal is an urban air vehicle.

In an implementation method, the NAS message is a session management request message.

Step 204e: The SMF sends, to the terminal based on the first indication information, a response message of rejecting or accepting the NAS message. Correspondingly, the terminal receives the response message of rejecting or accepting the NAS message.

According to the foregoing solution, if the urban air vehicle sends a NAS message, the SMF determines, based on first indication information that is from the USS and that indicates that the urban air vehicle is allowed to execute the unmanned flight service or the urban air vehicle is not allowed to execute the unmanned flight service, to send the response message of rejecting the NAS message or the response message of accepting the NAS message to the urban air vehicle. According to the method, execution of the unmanned flight service by the urban air vehicle is effectively controlled, so that the urban air vehicle that cannot execute the unmanned flight service does not execute the unmanned flight service, and flight safety of the urban air vehicle is improved.

In an implementation method, if the SMF sends the response message of rejecting the NAS message to the terminal in step 204e, the response message of rejecting the NAS message may carry a cause value, and the cause value is that the unmanned flight service is prohibited. The terminal is notified of the rejection cause, so that the terminal no longer initiates the unmanned flight service, to help reduce signaling overheads of the terminal.

In an implementation method, before step 204e, the SMF may further determine, based on the first indication information, whether to reject the NAS message or accept the NAS message. A method for determining, by the SMF, whether to reject the NAS message or accept the NAS message is similar to the method for determining, by the SMF, whether to reject the NAS message or accept the NAS message in the embodiment corresponding to FIG. 2(a). For details, refer to the foregoing descriptions.

In an implementation method, in this embodiment of this application, the unmanned flight service of the terminal may be further controlled with reference to a flight type of the terminal. The flight type may be a manned type or an unmanned type. For example, the first indication information in step 204e indicates whether the terminal is allowed to execute the unmanned flight service if the flight type of the terminal is the manned type. A method for determining, by the SMF, whether to reject the NAS message or accept the NAS message is similar to the method for determining, by the SMF, whether to reject the NAS message or accept the NAS message in the embodiment corresponding to FIG. 2(a). For details, refer to the foregoing descriptions.

The following describes the foregoing implementation method with reference to a specific example.

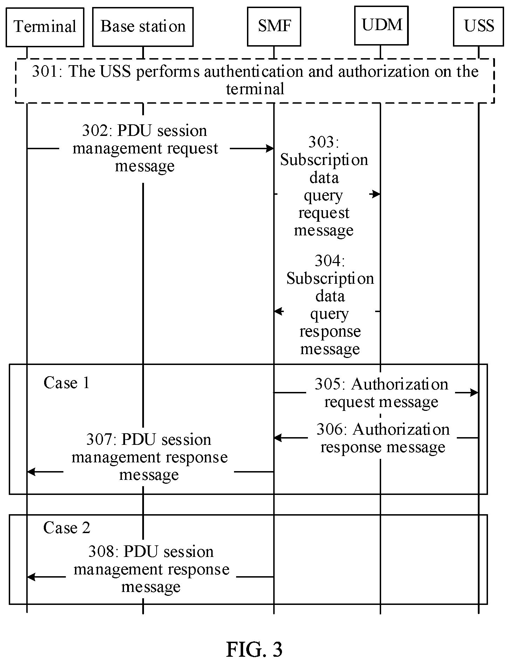

FIG. 3 shows a communication method according to an embodiment of this application. The method includes the following steps.

Step 301: A USS performs authentication and authorization on a terminal.

The terminal is an urban air vehicle.

The USS performs authentication and authorization on the terminal. If the terminal is valid, service authorization is performed on the terminal. If the terminal is invalid, the service authorization is not performed on the terminal. In this embodiment of this application, an authentication result of the USS for the terminal is that the terminal is valid.

The terminal herein may be an urban air vehicle that accesses a 3GPP network.

This step is an optional step. If authentication and authorization are performed on the terminal in a session establishment procedure, step 301 may not be performed.

Step 302: The terminal sends a PDU session management request (PDU session management request) message to an SMF. Correspondingly, the SMF receives the PDU session management request message.

The PDU session management request message is for requesting establishment of a session for an unmanned flight service. For example, the PDU session management request message is a PDU session establishment request (PDU session establishment request) message, and the PDU session establishment request message is for requesting establishment of a new PDU session for the unmanned flight service. For another example, the PDU session management request message is a PDU session modification request (PDU session modification request) message. The PDU session modification request message is for requesting establishment of an existing PDU session that is not used for the unmanned flight service as a PDU session for the unmanned flight service, in other words, modify the PDU session to be used for the unmanned flight service. A function and an implementation method of the PDU session management request message herein are also applicable to a PDU session management request message in another embodiment of this application. Details are not described below.

In a specific implementation, that the PDU session management request message is for requesting establishment of the session for the unmanned flight service may be that a name of the PDU session management request message is for requesting establishment of the session for the unmanned flight service, or the PDU session management request message includes indication information for requesting establishment of the session for the unmanned flight service.

Step 303: The SMF sends a subscription data request (subscription data request) message to the UDM, and correspondingly, the UDM receives the subscription data request message.

The subscription data request message is for requesting session management subscription data of the terminal.

In an implementation method, the subscription data request message includes an identifier of the terminal, and a data network name (data network name, DNN) and single network slice selection assistance information (single network slice selection assistance information, S-NSSAI) corresponding to the requested session, and the subscription data request message is for requesting session management subscription data corresponding to the identifier of the terminal and the (DNN, S-NSSAI).

Step 304: The UDM sends a subscription data response (subscription data response) message to the SMF, and correspondingly, the SMF receives the subscription data response message.

The subscription data response message includes session management subscription data, and the session management subscription data includes indication information.

In an implementation method, the indication information indicates whether the terminal is allowed to execute the unmanned flight service. In other words, the indication information indicates that the terminal is allowed to execute the unmanned flight service, or indicates that the terminal is not allowed to execute the unmanned flight service.

In another implementation method, the indication information indicates whether the terminal is allowed to execute the unmanned flight service if a flight type of the terminal is a manned type. To be specific, the indication information indicates that if the flight type of the terminal is the manned type, the terminal is allowed to execute the unmanned flight service; or indicates that if the flight type of the terminal is the manned type, the terminal is not allowed to execute the unmanned flight service.

In an implementation method, if the SMF locally stores the session management subscription data, step 303 and step 304 may not need to be performed, and the SMF may locally obtain the session management subscription data.

It should be noted that, in an implementation, if the indication information in the session management subscription data indicates that "the terminal is allowed to execute the unmanned flight service", it only indicates that the terminal can request the unmanned flight service, but does not mean that authorization of the unmanned flight service succeeds, and authorization needs to be requested, based on the indication information, from an entity (for example, a USS) that executes the unmanned flight service. The description of the indication information in the session management subscription data herein is also applicable to indication information in subscription data (for example, session management subscription data or mobility management subscription data) in another embodiment.

In an implementation method, if the indication information in the session management subscription data indicates that the terminal is allowed to execute the unmanned flight service, the following step 305 to step 307 are performed. If the indication information in the session management subscription data indicates that the terminal is not allowed to execute the unmanned flight service, the following step 308 is performed.

In another implementation method, if the indication information in the session management subscription data indicates that the terminal is allowed to execute the unmanned flight service if the flight type of the terminal is the manned type, and the SMF determines that the flight type of the terminal is the manned type, the following step 305 to step 307 are performed. If the SMF determines that the flight type of the terminal is the unmanned type, the SMF also performs the following step 305 to step 307. If the indication information in the session management subscription data indicates that the terminal is not allowed to execute the unmanned flight service if the flight type of the terminal is the manned type, and the SMF determines that the flight type of the terminal is the manned type, the following step 308 is performed. For example, a method for determining the flight type of the terminal by the SMF may be as follows: The SMF receives indication information from the AMF, the USS, or the terminal, where the indication information indicates the flight type of the terminal; or the SMF obtains the flight type of the terminal from the session management subscription data in step 304. The method for determining the flight type of the terminal by the SMF described herein is also applicable to another embodiment, and details are not described below.

Step 305: The SMF sends an authorization request (authorization request) message to the USS. Correspondingly, the USS receives the authorization request message.

If step 301 has been performed, the authorization request message is for requesting authorization of the unmanned flight service of the terminal.

If step 301 is not performed, the authorization request message is for requesting authentication and authorization of the terminal, and is for requesting authorization of the unmanned flight service of the terminal.

Step 306: The USS sends an authorization response (authorization response) message to the SMF. Correspondingly, the SMF receives the authorization response message.

In an implementation method, the authorization request message is for requesting authorization of the unmanned flight service of the terminal. If the USS determines to authorize the unmanned flight service of the terminal, the authorization response message indicates that the unmanned flight service of the terminal is authorized, in other words, the authorization succeeds. If the USS determines not to authorize the unmanned flight service of the terminal, the authorization response message indicates that the unmanned flight service of the terminal is not authorized, in other words, the authorization fails.

In another implementation method, the authorization request message is for requesting authentication and authorization of the terminal, and is for requesting authorization of the unmanned flight service of the terminal. If the authentication and authorization performed by the USS on the terminal succeed, and the USS determines to authorize the unmanned flight service of the terminal, the authorization response message indicates that the unmanned flight service of the terminal is authorized. If the authentication and authorization performed by the USS on the terminal fail, or the USS determines not to authorize the unmanned flight service of the terminal, the authorization response message indicates that authentication and authorization of the terminal fail or the unmanned flight service of the terminal is not authorized. In this scenario, if the authorization response message indicates that authentication and authorization of the terminal fail, it also implicitly indicates that the unmanned flight service of the terminal is not authorized.

Step 307: The SMF sends a PDU session management response message to the terminal, and correspondingly, the terminal receives the PDU session management response message.

If the PDU session management request message in step 302 is a PDU session establishment request message, the PDU session management response message is a PDU session establishment response message. If the PDU session management request message in step 302 is a PDU session modification request message, the PDU session management response message is a PDU session modification response message.

If the authorization response message indicates that the unmanned flight service of the terminal is not authorized, the PDU session management response message is for rejecting the PDU session management request message of the terminal. The PDU session management response message may include a cause value, and the cause value is that the unmanned flight service is prohibited. Optionally, the PDU session management response message may be a PDU session establishment reject message or a PDU session modification reject message.

If the authorization response message indicates that the unmanned flight service of the terminal is authorized, the PDU session management response message is for accepting the PDU session management request message of the terminal. Optionally, the PDU session management response message may be a PDU session establishment accept message or a PDU session modification accept message.

Step 308: The SMF sends a PDU session management response message to the terminal, and correspondingly, the terminal receives the PDU session management response message.

After step 304, the SMF determines not to allow the terminal to execute the unmanned flight service. Therefore, the SMF performs step 308 after step 304. The PDU session management response message is for rejecting the PDU session management request message of the terminal. The PDU session management response message may include a cause value, and the cause value is that the unmanned flight service is prohibited. Optionally, the PDU session management response message may be a PDU session establishment reject message or a PDU session modification reject message.

According to the foregoing solution, the SMF determines, in a session establishment/modification process, whether to accept or reject the unmanned flight service requested by the terminal, so that the urban air vehicle that cannot execute the unmanned flight service does not execute the unmanned flight service, and flight safety of the urban air vehicle is improved.

In an implementation method, in addition to the foregoing described functions, the indication information in step 304 may further indicate whether the terminal has an aviation capability. If the indication information indicates that the terminal does not have the aviation capability, the SMF subsequently rejects execution of the unmanned flight service by the terminal. If the indication information indicates that the terminal has the aviation capability, the SMF subsequently determines, according to the method described above, to reject or accept execution of the unmanned flight service by the terminal.

In another implementation method, the session management subscription data in step 304 further includes another piece of indication information, and the indication information indicates whether the terminal has the aviation capability. If the indication information indicates that the terminal does not have the aviation capability, the SMF subsequently rejects execution of the unmanned flight service by the terminal. If the indication information indicates that the terminal has the aviation capability, the SMF subsequently determines, according to the method described above, to reject or accept execution of the unmanned flight service by the terminal.

Alternatively, the SMF may learn, by using another method, whether the terminal has the aviation capability. For example, the AMF sends indication information to the SMF, where the indication information indicates whether the terminal has the aviation capability. Alternatively, when receiving the PDU session management request message in step 302, the SMF considers that the terminal has the aviation capability. This is because the terminal actually first sends the PDU session management request message to the AMF, and then the AMF forwards the PDU session management request message to the SMF. Because the AMF does not reject the PDU session management request message, it indicates that the terminal has the aviation capability. When the terminal has the aviation capability, the SMF determines, according to the method described above, to reject or accept execution of the unmanned flight service by the terminal.

In an implementation method, the PDU session management request message in step 302 is not for requesting establishment of the session for the unmanned flight service, but is for requesting establishment of a session for a first service. In this case, the SMF further needs to determine whether the first service is an unmanned flight service. If the first service is an unmanned flight service, the SMF determines, according to the foregoing method, to reject or accept execution of the unmanned flight service by the terminal. If the first service is not an unmanned flight service, the SMF may perform a subsequent procedure according to a method in conventional technologies, for example, perform a procedure of establishing or modifying a PDU session.

In an implementation method, that the PDU session management request message in step 302 is for requesting establishment of the session for the unmanned flight service may be specifically that the PDU session management request message includes indication information, and the indication information is for requesting establishment of a session for C2 communication, or requesting to modify the session to be used for C2 communication. The C2 communication refers to communication between the terminal and a controller, and a service corresponding to the C2 communication in this embodiment of this application is an unmanned flight service. In this case, if the SMF determines that the service corresponding to the C2 communication is an unmanned flight service, it is determined that the PDU session management request message is for requesting establishment of the session for the unmanned flight service. The SMF then determines, according to the foregoing described method, to reject or accept execution of the unmanned flight service by the terminal. It should be noted that, in actual application, the service corresponding to the C2 communication may be an unmanned flight service, or may not be an unmanned flight service. All services corresponding to the C2 communication discussed in this embodiment of this application are unmanned flight services.

If the PDU session management request message in step 302 includes the indication information for requesting establishment of the session for the C2 communication, the cause value carried in the PDU session management response message in step 308 may be that the unmanned flight service is prohibited, or the C2 communication is prohibited.

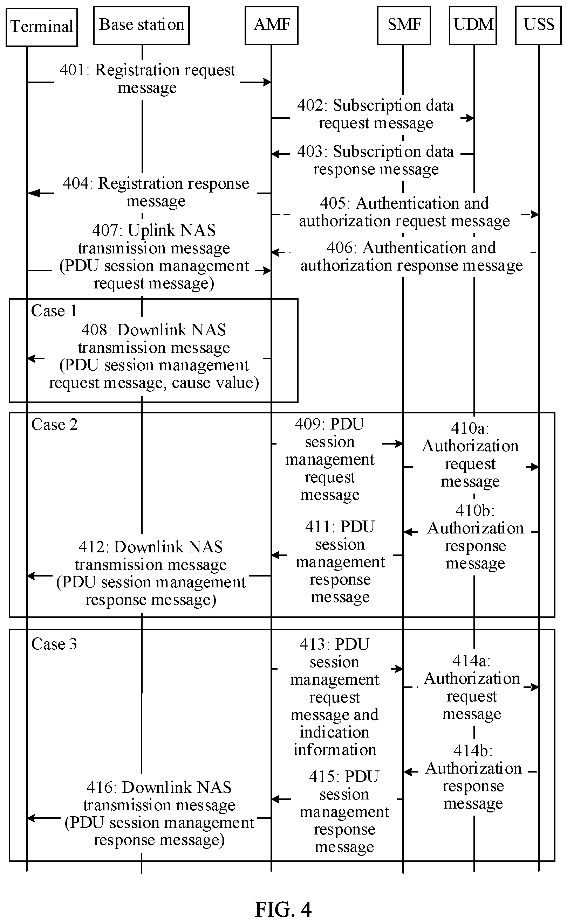

FIG. 4 shows a communication method according to an embodiment of this application. The method includes the following steps.

Step 401: A terminal sends a registration request message to an AMF. Correspondingly, the AMF receives the registration request message.

Optionally, the registration request message includes indication information, and the indication information indicates that a flight type of the terminal is an unmanned type or a manned type.

Step 402: The AMF sends a subscription data request message to a UDM. Correspondingly, the UDM receives the subscription data request message.

The subscription data request message is for requesting mobility management subscription data of the terminal.

Step 403: The UDM sends a subscription data response message to the AMF, and correspondingly, the AMF receives the subscription data response message.

The subscription data response message includes mobility management subscription data, and the mobility management subscription data includes indication information.

In an implementation method, the indication information indicates whether the terminal is allowed to execute the unmanned flight service. In other words, the indication information indicates that the terminal is allowed to execute the unmanned flight service, or indicates that the terminal is not allowed to execute the unmanned flight service.

In another implementation method, the indication information indicates whether the terminal is allowed to execute the unmanned flight service if a flight type of the terminal is a manned type. To be specific, the indication information indicates that if the flight type of the terminal is the manned type, the terminal is allowed to execute the unmanned flight service; or indicates that if the flight type of the terminal is the manned type, the terminal is not allowed to execute the unmanned flight service. For a method for determining the flight type of the terminal by the AMF, refer to the description of determining the flight type of the terminal by the SMF in step 304.

In an implementation method, if the AMF locally stores the mobility management subscription data, step 402 and step 403 may not need to be performed, and the AMF may locally obtain the mobility management subscription data.

Step 404: The AMF sends a registration response message to the terminal. Correspondingly, the terminal receives the registration response message.

Optionally, the registration response message may be a registration accept message.

Optionally, if the registration request message includes the indication information, the indication information indicates that the flight type of the terminal is the manned type, and the mobility management subscription data indicates that the flight of the terminal is the unmanned type, the AMF may reject the registration request message of the terminal. In other words, the registration response message is a registration reject message. In addition, the registration reject message carries a cause value, and the cause value is that access of the manned type is forbidden. If the AMF rejects the registration request message of the terminal, the procedure ends.

Step 405: The AMF sends an authentication and authorization request message to a USS. Correspondingly, the USS receives the authentication and authorization request message.

The authentication and authorization request message is for requesting authentication and authorization of the terminal, in other words, determine whether the terminal is valid.

Step 406: The USS sends an authentication and authorization response message to the AMF. Correspondingly, the AMF receives the authentication and authorization response message.

The authentication and authorization response message indicates that the authentication and authorization of the terminal succeed or fail.

Optionally, the authentication and authorization response message includes a flight type of the terminal, and the flight type of the terminal is a manned type or an unmanned type.

Step 405 and step 406 are optional steps.

Step 407: The terminal sends an uplink NAS transmission message to the AMF, where the uplink NAS transmission message includes a PDU session management request message. Correspondingly, the AMF receives the uplink NAS transmission message.

Optionally, the uplink NAS transmission message further includes indication information, and the indication information indicates that the PDU session management request message is for requesting establishment of a session for the unmanned flight service.

The AMF does not parse the PDU session management request message, but forwards the PDU session management request message to the SMF.

Optionally, the uplink NAS transmission message further includes (DNN, S-NSSAI), and the PDU session management request message is for requesting establishment of a session corresponding to (DNN, S-NSSAI) of the unmanned flight service.

In a first case, if the uplink NAS transmission message includes the indication information indicating that the PDU session management request message is for requesting establishment of the session for the unmanned flight service, the indication information triggers the AMF to determine to reject or accept the PDU session management request message. Specifically, if the indication information in the mobility management subscription data indicates that the terminal is not allowed to execute the unmanned flight service, the following step 408 is performed after step 407, and the procedure ends after step 408. Alternatively, if the indication information in the mobility management subscription data indicates that the terminal is not allowed to execute the unmanned flight service if the flight type of the terminal is the manned type, and the AMF determines that the flight type of the terminal is the manned type, the following step 408 is performed after step 407, and the procedure ends after step 408.

In a second case, if the uplink NAS transmission message includes the indication information indicating that the PDU session management request message is for requesting establishment of the session for the unmanned flight service, the indication information triggers the AMF to determine to reject or accept the PDU session management request message. Specifically, if the indication information in the mobility management subscription data indicates that the terminal is allowed to execute the unmanned flight service, or indicates that the terminal is allowed to execute the unmanned flight service if the flight type of the terminal is the manned type, and the AMF determines that the flight type of the terminal is the manned type, or the AMF determines that the flight type of the terminal is the unmanned type, the following step 409 to step 412 are performed after step 407, and the procedure ends after step 412.

In a third case, the uplink NAS transmission message does not include the indication information indicating that the PDU session management request message is for requesting establishment of the session for the unmanned flight service. In this case, because the AMF cannot parse the PDU session management request message, the AMF cannot learn that the PDU session management request message is for requesting establishment of the session for the unmanned flight service. In this case, the following step 413 to step 416 are performed after step 407, and the procedure ends after step 416.

Step 408: The AMF sends a downlink NAS transmission message to the terminal. Correspondingly, the terminal receives the downlink NAS transmission message.

The downlink NAS transmission message includes a PDU session management request message and a cause value, and the cause value is that the unmanned flight service is prohibited.

Step 409: The AMF sends the PDU session management request message to the SMF. Correspondingly, the SMF receives the PDU session management request message.

The PDU session management request message is the PDU session management request message in the uplink NAS transmission message in step 407.

In an implementation, the AMF sends a PDU session context management request message to the SMF, where the PDU session context management request message includes the PDU session management request message.

Step 410a: The SMF sends an authorization request message to the USS. Correspondingly, the USS receives the authorization request message.

Step 410b: The USS sends an authorization response message to the SMF. Correspondingly, the SMF receives the authorization response message.

Step 410a and step 410b are the same as step 305 and step 306. Refer to the foregoing descriptions.

Step 411: The SMF sends a PDU session management response message to the AMF. Correspondingly, the AMF receives the PDU session management response message.

In an implementation, the SMF sends a PDU session context management response message to the AMF, where the PDU session context management response message includes the PDU session management response message.

The SMF sends the PDU session management response message to the terminal through the AMF.

In an implementation method, if the SMF learns that the USS authorizes the unmanned flight service of the terminal, the PDU session management response message is a PDU session management accept message. To be specific, the PDU session management accept message is sent to the terminal. In this case, the SMF accepts the PDU session management request message.

In an implementation method, if the SMF learns that the USS does not authorize the unmanned flight service of the terminal, the PDU session management response message is a PDU session management reject message. To be specific, the SMF sends the PDU session management reject message to the terminal. The PDU session management reject message includes a cause value, and the cause value is that the unmanned flight service is prohibited. In this case, the SMF rejects the PDU session management request message.

Step 412: The AMF sends a downlink NAS transmission message to the terminal. Correspondingly, the terminal receives the downlink NAS transmission message.

The downlink NAS transmission message includes a PDU session management response message. The PDU session management response message is a PDU session management reject message or a PDU session management accept message.

Step 413: The AMF sends a PDU session management request message and indication information to the SMF. Correspondingly, the SMF receives the PDU session management request message and the indication information.

In an implementation, the AMF sends a PDU session context management request message to the SMF, where the PDU session context management request message includes the PDU session management request message and the indication information.

The function of the indication information is the same as that of the indication information in the mobility management subscription data in step 403.

The PDU session management request message is the PDU session management request message in the uplink NAS transmission message in step 407.

After receiving the PDU session management request message and the indication information, the SMF needs to determine, based on the indication information, to reject or accept the PDU session management request message. Specifically, if the indication information indicates that the terminal is not allowed to execute the unmanned flight service, or indicates that the terminal is not allowed to execute the unmanned flight service if the flight type of the terminal is the manned type, and the SMF determines that the flight type of the terminal is the manned type, the SMF determines to reject the PDU session management request message. In this case, the following step 414a and step 414b do not need to be performed. If the indication information indicates that the terminal is allowed to execute the unmanned flight service, or indicates that the terminal is allowed to execute the unmanned flight service if the flight type of the terminal is the manned type, and the SMF determines that the flight type of the terminal is the manned type, or the SMF determines that the flight type of the terminal is the unmanned type, the SMF needs to request the USS to authorize the unmanned flight service of the terminal, in other words, perform the following step 414a and step 414b. If authorization of the USS succeeds, the SMF determines to accept the PDU session management request message. If authorization of the USS fails, the SMF determines to reject the PDU session management request message.

Step 414a: The SMF sends an authorization request message to the USS. Correspondingly, the USS receives the authorization request message.

Step 414b: The USS sends an authorization response message to the SMF. Correspondingly, the SMF receives the authorization response message.

Step 414a and step 414b are the same as step 305 and step 306. Refer to the foregoing descriptions.

Step 415: The SMF sends a PDU session management response message to the AMF. Correspondingly, the AMF receives the PDU session management response message.

In an implementation, the SMF sends a PDU session context management response message to the AMF, where the PDU session context management response message includes the PDU session management response message.

If the SMF determines to accept the PDU session management request message, the PDU session management response message may be the PDU session management accept message.

If the SMF determines to reject the PDU session management request message, the PDU session management response message may include a cause value, and the cause value is that the unmanned flight service is prohibited. The PDU session management response message may be a PDU session management reject message.

Step 416: The AMF sends a downlink NAS transmission message to the terminal. Correspondingly, the terminal receives the downlink NAS transmission message.

The downlink NAS transmission message includes a PDU session management response message.

According to the foregoing solution, the AMF determines, in the terminal registration process, whether to accept or reject the unmanned flight service requested by the terminal, or the SMF determines, in a session establishment/modification process, whether to accept or reject the unmanned flight service requested by the terminal, so that the urban air vehicle that cannot execute the unmanned flight service does not execute the unmanned flight service, and flight safety of the urban air vehicle is improved.

In an implementation method, in addition to the foregoing described functions, the indication information in step 403 may further indicate whether the terminal has an aviation capability. If the indication information indicates that the terminal does not have the aviation capability, the AMF or the SMF subsequently rejects execution of the unmanned flight service by the terminal. If the indication information indicates that the terminal has the aviation capability, the AMF or the SMF subsequently determines, according to the method described above, to reject or accept execution of the unmanned flight service by the terminal.

In another implementation method, the mobility management subscription data in step 403 further includes another piece of indication information, and the indication information indicates whether the terminal has the aviation capability. If the indication information indicates that the terminal does not have the aviation capability, the AMF or the SMF subsequently rejects execution of the unmanned flight service by the terminal. If the indication information indicates that the terminal has the aviation capability, the AMF or the SMF subsequently determines, according to the method described above, to reject or accept execution of the unmanned flight service by the terminal.

In an implementation method, the PDU session management request message in step 407 is not for requesting establishment of the session for the unmanned flight service, but is for requesting establishment of a session for a first service. In this case, the AMF or the SMF further needs to determine whether the first service is an unmanned flight service. If the first service is an unmanned flight service, the AMF or the SMF determines, according to the foregoing method, to reject or accept execution of the unmanned flight service by the terminal. If the first service is not an unmanned flight service, the AMF or the SMF may perform a subsequent procedure according to a method in conventional technologies, for example, perform a procedure of establishing or modifying a PDU session.

In an implementation method, that the PDU session management request message in step 407 is for requesting establishment of the session for the unmanned flight service may be specifically that the PDU session management request message includes indication information, and the indication information is for requesting establishment of a session for C2 communication, or requesting to modify the session to be used for C2 communication. The C2 communication refers to communication between the terminal and a controller, and a service corresponding to the C2 communication in this embodiment of this application is an unmanned flight service. In this case, if the AMF or the SMF determines that the service corresponding to the C2 communication is an unmanned flight service, it is determined that the PDU session management request message is for requesting establishment of the session for the unmanned flight service. The AMF or the SMF then determines, according to the foregoing described method, to reject or accept execution of the unmanned flight service by the terminal. It should be noted that, in actual application, the service corresponding to the C2 communication may be an unmanned flight service, or may not be an unmanned flight service. All services corresponding to the C2 communication discussed in this embodiment of this application are unmanned flight services.

If the PDU session management request message in step 407 includes the indication information for requesting establishment of the session for the C2 communication, the cause value described in the embodiment corresponding to FIG. 4 may be that the unmanned flight service is prohibited, or the C2 communication is prohibited.

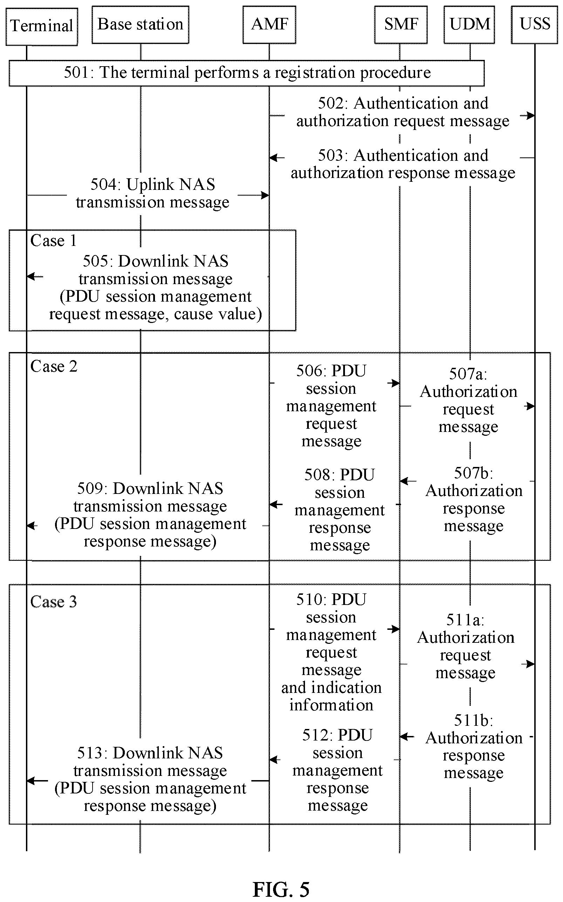

FIG. 5 shows a communication method according to an embodiment of this application. The method includes the following steps.

Step 501: A terminal performs a registration procedure.

Step 502: An AMF sends an authentication and authorization request message to a USS. Correspondingly, the USS receives the authentication and authorization request message.

The authentication and authorization request message is for requesting authentication and authorization of the terminal, in other words, determine whether the terminal is valid.

Step 503: The USS sends an authentication and authorization response message to the AMF. Correspondingly, the AMF receives the authentication and authorization response message.

The authentication and authorization response message indicates that the authentication and authorization of the terminal succeed or fail.

The authentication and authorization response message further includes indication information.

In an implementation method, the indication information indicates whether the terminal is allowed to execute an unmanned flight service. In other words, the indication information indicates that the terminal is allowed to execute the unmanned flight service, or indicates that the terminal is not allowed to execute the unmanned flight service.

In another implementation method, the indication information indicates whether the terminal is allowed to execute the unmanned flight service if a flight type of the terminal is a manned type. To be specific, the indication information indicates that if the flight type of the terminal is the manned type, the terminal is allowed to execute the unmanned flight service; or indicates that if the flight type of the terminal is the manned type, the terminal is not allowed to execute the unmanned flight service.

Optionally, the authentication and authorization response message further includes a flight type of the terminal, and the flight type of the terminal is a manned type or an unmanned type.

Step 504 to step 513 are the same as step 407 to step 416.

It should be noted that, in step 502 and step 503, the USS has been requested to perform authentication and authorization on the validity of the terminal. Therefore, in step 507a and step 507b, and step 511a and step 511b, the USS does not need to perform authentication and authorization on the validity of the terminal.

According to the foregoing solution, the AMF determines, in the terminal registration process, whether to accept or reject the unmanned flight service requested by the terminal, or the SMF determines, in a session establishment/modification process, whether to accept or reject the unmanned flight service requested by the terminal, so that the urban air vehicle that cannot execute the unmanned flight service does not execute the unmanned flight service, and flight safety of the urban air vehicle is improved. A main difference between the embodiment in FIG. 5 and the embodiment in FIG. 4 lies in that: In the embodiment in FIG. 4, the indication information used by the AMF to determine whether the unmanned flight service of the terminal is allowed is obtained from the UDM, and in the embodiment in FIG. 5, the indication information is obtained from the USS.

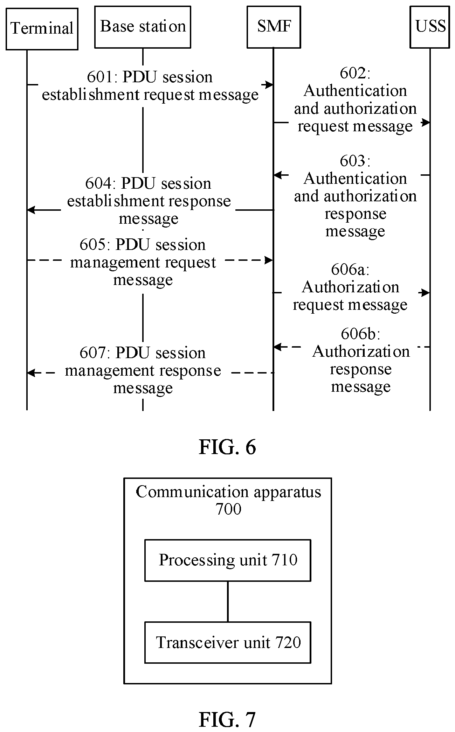

FIG. 6 shows a communication method according to an embodiment of this application. The method includes the following steps.

Step 601: A terminal sends a PDU session establishment request message to an SMF. Correspondingly, the SMF receives the PDU session establishment request message.

The PDU session establishment request message is for requesting establishment of a session for a non-unmanned flight service, or the PDU session establishment request message is for requesting establishment of a session for an unmanned flight service.

Step 602: The SMF sends an authentication and authorization request message to a USS. Correspondingly, the USS receives the authentication and authorization request message.

The authentication and authorization request message is for requesting authentication and authorization of the terminal, in other words, determine whether the terminal is valid.

Step 603: The USS sends an authentication and authorization response message to the SMF. Correspondingly, the SMF receives the authentication and authorization response message.

The authentication and authorization response message indicates that the authentication and authorization of the terminal succeed or fail.

The authentication and authorization response message further includes indication information.

In an implementation method, the indication information indicates whether the terminal is allowed to execute the unmanned flight service. In other words, the indication information indicates that the terminal is allowed to execute the unmanned flight service, or indicates that the terminal is not allowed to execute the unmanned flight service.

In another implementation method, the indication information indicates whether the terminal is allowed to execute the unmanned flight service if a flight type of the terminal is a manned type. To be specific, the indication information indicates that if the flight type of the terminal is the manned type, the terminal is allowed to execute the unmanned flight service; or indicates that if the flight type of the terminal is the manned type, the terminal is not allowed to execute the unmanned flight service.

Optionally, the authentication and authorization response message further includes a flight type of the terminal, and the flight type of the terminal is a manned type or an unmanned type.

Step 604: The SMF sends a PDU session establishment response message to the terminal, and correspondingly, the terminal receives the PDU session establishment response message.

If the PDU session establishment request message in step 601 is for requesting establishment of the session for the unmanned flight service, the following step 605 to step 607 do not need to be performed. If the SMF accepts the PDU session establishment request message, the PDU session establishment response message indicates that the session is successfully established or indicates that the PDU session establishment request message is accepted. If the SMF rejects the PDU session establishment request message, the PDU session establishment response message may include a cause value, where the cause value is that the unmanned flight service is prohibited, and the PDU session establishment response message indicates that the session establishment fails or indicates that the PDU session establishment request message is rejected. For a method for determining, by the SMF, whether to reject or accept the PDU session establishment request message, refer to the description in the embodiment in FIG. 5.

If the PDU session establishment request message in step 601 is for requesting establishment of the session for the non-unmanned flight service, the PDU session establishment response message indicates that the session is successfully established, and the following step 605 to step 607 are further performed after step 604.

Step 605: The terminal sends a PDU session management request message to the SMF. Correspondingly, the SMF receives the PDU session management request message.

After receiving the PDU session management request message and the indication information in step 603, the SMF needs to determine, based on the indication information, to reject or accept the PDU session management request message. Specifically, if the indication information indicates that the terminal is not allowed to execute the unmanned flight service, or indicates that the terminal is not allowed to execute the unmanned flight service if the flight type of the terminal is the manned type, and the SMF determines that the flight type of the terminal is the manned type, the SMF determines to reject the PDU session management request message. In this case, step 606a and step 606b do not need to be performed. If the indication information indicates that the terminal is allowed to execute the unmanned flight service, or indicates that the terminal is allowed to execute the unmanned flight service if the flight type of the terminal is the manned type, and the SMF determines that the flight type of the terminal is the manned type, or the SMF determines that the flight type of the terminal is the unmanned type, the SMF needs to request the USS to authorize the unmanned flight service of the terminal. If authorization of the USS succeeds, the SMF determines to accept the PDU session management request message. If authorization of the USS fails, the SMF determines to reject the PDU session management request message.

Step 606a: The SMF sends an authorization request message to the USS. Correspondingly, the USS receives the authorization request message.

Step 606b: The USS sends an authorization response message to the SMF. Correspondingly, the SMF receives the authorization response message.

Step 606a and step 606b are the same as step 305 and step 306. Refer to the foregoing descriptions.

Step 607: The SMF sends a PDU session management response message to the terminal, and correspondingly, the terminal receives the PDU session management response message.

If the SMF determines to accept the PDU session management request message, the PDU session management response message may be the PDU session management accept message.

If the SMF determines to reject the PDU session management request message, the PDU session management response message may include a cause value, and the cause value is that the unmanned flight service is prohibited. The PDU session management response message may be a PDU session management reject message.

According to the foregoing solution, the SMF determines, in a session establishment/modification process, whether to accept or reject the unmanned flight service requested by the terminal, so that the urban air vehicle that cannot execute the unmanned flight service does not execute the unmanned flight service, and flight safety of the urban air vehicle is improved. A main difference between the embodiment in FIG. 6 and the embodiment in FIG. 3 lies in that: In the embodiment in FIG. 3, the indication information used by the SMF to determine whether the unmanned flight service of the terminal is allowed is obtained from the UDM, and in the embodiment in FIG. 6, the indication information used by the SMF to determine whether the unmanned flight service of the terminal is allowed is obtained from the USS.

In an implementation method, in addition to the foregoing described functions, the indication information in step 603 may further indicate whether the terminal has an aviation capability. If the indication information indicates that the terminal does not have the aviation capability, the SMF subsequently rejects execution of the unmanned flight service by the terminal. If the indication information indicates that the terminal has the aviation capability, the SMF subsequently determines, according to the method described above, to reject or accept execution of the unmanned flight service by the terminal.

In another implementation method, the authentication and authorization response message in step 603 further includes another piece of indication information, and the indication information indicates whether the terminal has the aviation capability. If the indication information indicates that the terminal does not have the aviation capability, the SMF subsequently rejects execution of the unmanned flight service by the terminal. If the indication information indicates that the terminal has the aviation capability, the SMF subsequently determines, according to the method described above, to reject or accept execution of the unmanned flight service by the terminal.

Alternatively, the SMF may learn, by using another method, whether the terminal has the aviation capability. For example, the AMF sends indication information to the SMF, where the indication information indicates whether the terminal has the aviation capability. Alternatively, when receiving the PDU session establishment request message in step 601, the SMF considers that the terminal has the aviation capability. This is because the terminal actually first sends the PDU session establishment request message to the AMF, and then the AMF forwards the PDU session establishment request message to the SMF. Because the AMF does not reject the PDU session establishment request message, it indicates that the terminal has the aviation capability. When the terminal has the aviation capability, the SMF determines, according to the method described above, to reject or accept execution of the unmanned flight service by the terminal.

In an implementation method, the PDU session management request message in step 605 is not for requesting establishment of the session for the unmanned flight service, but is for requesting establishment of a session for a first service. In this case, the SMF further needs to determine whether the first service is an unmanned flight service. If the first service is an unmanned flight service, the SMF determines, according to the foregoing method, to reject or accept execution of the unmanned flight service by the terminal. If the first service is not an unmanned flight service, the SMF may perform a subsequent procedure according to a method in conventional technologies, for example, perform a procedure of establishing or modifying a PDU session.

In an implementation method, that the PDU session management request message in step 605 is for requesting establishment of the session for the unmanned flight service may be specifically that the PDU session management request message includes indication information, and the indication information is for requesting establishment of a session for C2 communication, or requesting to modify the session to be used for C2 communication. The C2 communication refers to communication between the terminal and a controller, and a service corresponding to the C2 communication in this embodiment of this application is an unmanned flight service. In this case, if the SMF determines that the service corresponding to the C2 communication is an unmanned flight service, it is determined that the PDU session management request message is for requesting establishment of the session for the unmanned flight service. The SMF then determines, according to the foregoing described method, to reject or accept execution of the unmanned flight service by the terminal. It should be noted that, in actual application, the service corresponding to the C2 communication may be an unmanned flight service, or may not be an unmanned flight service. All services corresponding to the C2 communication discussed in this embodiment of this application are unmanned flight services.

If the PDU session management request message in step 605 includes the indication information for requesting establishment of the session for the C2 communication, the cause value described in the embodiment corresponding to FIG. 6 may be that the unmanned flight service is prohibited, or the C2 communication is prohibited.

It may be understood that, to implement the functions in the foregoing embodiment, the AMF and the SMF include corresponding hardware structures and/or software modules for performing the functions. A person of ordinary skill in the art should easily be aware that, in combination with the units and the method steps of the examples described in embodiments disclosed in this application, this application can be implemented by software, or a combination of hardware and computer software. Whether a function is performed by hardware or hardware driven by computer software depends on particular application scenarios and design constraints of the technical solutions.

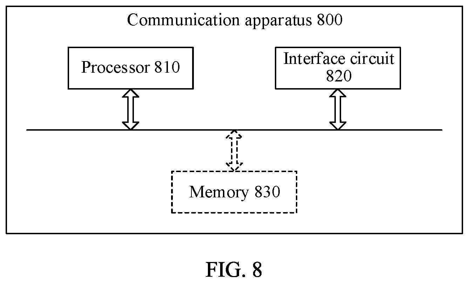

FIG. 7 and FIG. 8 are schematic diagrams of structures of possible communication apparatuses according to an embodiment of this application. Such communication apparatuses may be configured to implement the functions of the AMF or the SMF in the foregoing method embodiments, and therefore can also implement the beneficial effects of the foregoing method embodiments. In embodiments of this application, the communication apparatus may be an AMF or an SMF, or may be a module (for example, a chip) used for an AMF or an SMF.

As shown in FIG. 7, a communication apparatus 700 includes a processing unit 710 and a transceiver unit 720. The communication apparatus 700 is configured to implement a function of the AMF or the SMF in the foregoing method embodiments.

In a first embodiment, the communication apparatus is configured to implement a function of the foregoing AMF or SMF: The transceiver unit 720 is configured to receive a non-access stratum NAS message from a terminal, where the terminal is an urban air vehicle. The processing unit 710 is configured to send, to the terminal based on subscription information of the terminal through the transceiver unit 720, a response message of rejecting or accepting the NAS message, where the subscription information indicates whether the terminal is allowed to execute an unmanned flight service.

In a possible implementation method, the transceiver unit 720 is further configured to: request the subscription information of the terminal from a subscription data management network element; and receive the subscription information from the subscription data management network element.

In a possible implementation method, the response message of rejecting the NAS message includes a cause value, and the cause value is that the unmanned flight service is prohibited.

In a possible implementation method, the processing unit 710 is further configured to determine, based on the subscription information, to reject or accept the NAS message.

In a possible implementation method, the processing unit 710 is specifically configured to: determine, if the subscription information indicates that the terminal is not allowed to execute the unmanned flight service, to reject the NAS message.

In a possible implementation method, the processing unit 710 is specifically configured to: send an authorization request message to an authentication and authorization server through the transceiver unit 720 if the subscription information indicates that the terminal is allowed to execute the unmanned flight service, where the authorization request message is for requesting authorization of the unmanned flight service of the terminal; receive an authorization response message from the authentication and authorization server through the transceiver unit 720, where the authorization response message indicates that the authorization fails; and determine, based on the authorization response message, to reject the NAS message.

In a possible implementation method, the processing unit 710 is specifically configured to: send an authorization request message to an authentication and authorization server through the transceiver unit 720 if the subscription information indicates that the terminal is allowed to execute the unmanned flight service, where the authorization request message is for requesting authorization of the unmanned flight service of the terminal; receive an authorization response message from the authentication and authorization server through the transceiver unit 720, where the authorization response message indicates that the authorization succeeds; and determine, based on the authorization response message, to accept the NAS message.

In a possible implementation method, that the subscription information indicates whether the terminal is allowed to execute an unmanned flight service includes: The subscription information indicates whether the terminal is allowed to execute the unmanned flight service if a flight type of the terminal is a manned type.

In a possible implementation method, the processing unit 710 is specifically configured to determine to reject the NAS message if the subscription information indicates that the terminal is not allowed to execute the unmanned flight service if the flight type of the terminal is the manned type, and the flight type of the terminal is the manned type.

In a possible implementation method, the processing unit 710 is specifically configured to: send an authorization request message to an authentication and authorization server through the transceiver unit 720 if the subscription information indicates that the terminal is allowed to execute the unmanned flight service if the flight type of the terminal is the manned type, and the flight type of the terminal is the manned type, where the authorization request message is for requesting authorization of the unmanned flight service of the terminal; receive an authorization response message from the authentication and authorization server through the transceiver unit 720, where the authorization response message indicates that the authorization fails; and determine, based on the authorization response message, to reject the NAS message.

In a possible implementation method, the processing unit 710 is specifically configured to: send an authorization request message to an authentication and authorization server through the transceiver unit 720 if the subscription information indicates that the terminal is allowed to execute the unmanned flight service if the flight type of the terminal is the manned type, and the flight type of the terminal is the manned type, where the authorization request message is for requesting authorization of the unmanned flight service of the terminal; receive an authorization response message from the authentication and authorization server through the transceiver unit 720, where the authorization response message indicates that the authorization succeeds; and determine, based on the authorization response message, to accept the NAS message.

In a possible implementation method, the NAS message is a session management request message, and the session management request message is for requesting establishment of a session for the unmanned flight service.

In a second embodiment, the communication apparatus is configured to implement a function of the foregoing SMF: The transceiver unit 720 is configured to receive a session management request message and indication information, where the session management request message is for requesting establishment of a session for an unmanned flight service, the indication information indicates whether a terminal is allowed to execute the unmanned flight service, and the terminal is an urban air vehicle; and the processing unit 710 is configured to send, based on the indication information through the transceiver unit 720, a response message of rejecting or accepting the session management request message to the terminal.

In a possible implementation method, the response message of rejecting the session management request message includes a cause value, and the cause value is that the unmanned flight service is prohibited.

In a possible implementation method, the processing unit 710 is further configured to determine, based on the indication information, to reject or accept the session management request message.

In a possible implementation method, the processing unit 710 is specifically configured to: determine to reject the session management request message if the indication information indicates that the terminal is not allowed to execute the unmanned flight service.

In a possible implementation method, the processing unit 710 is specifically configured to: send an authorization request message to an authentication and authorization server through the transceiver unit 720 if the indication information indicates that the terminal is allowed to execute the unmanned flight service, where the authorization request message is for requesting authorization of the unmanned flight service of the terminal; receive an authorization response message from the authentication and authorization server through the transceiver unit 720, where the authorization response message indicates that the authorization fails; and determine, based on the authorization response message, to reject the session management request message.

In a possible implementation method, the processing unit 710 is specifically configured to: send an authorization request message to an authentication and authorization server through the transceiver unit 720 if the indication information indicates that the terminal is allowed to execute the unmanned flight service, where the authorization request message is for requesting authorization of the unmanned flight service of the terminal; receive an authorization response message from the authentication and authorization server through the transceiver unit 720, where the authorization response message indicates that the authorization succeeds; and determine, based on the authorization response message, to accept the session management request message.

In a possible implementation method, that the indication information indicates whether the terminal is allowed to execute the unmanned flight service includes: The indication information indicates whether the terminal is allowed to execute the unmanned flight service if a flight type of the terminal is a manned type.

In a possible implementation method, the processing unit 710 is specifically configured to: determine to reject the session management request message if the indication information indicates that the terminal is not allowed to execute the unmanned flight service if the flight type of the terminal is the manned type, and the flight type of the terminal is the manned type.

In a possible implementation method, the processing unit 710 is specifically configured to: send an authorization request message to an authentication and authorization server through the transceiver unit 720 if the indication information indicates that the terminal is allowed to execute the unmanned flight service if the flight type of the terminal is the manned type, and the flight type of the terminal is the manned type, where the authorization request message is for requesting authorization of the unmanned flight service of the terminal; receive an authorization response message from the authentication and authorization server through the transceiver unit 720, where the authorization response message indicates that the authorization fails; and determine, based on the authorization response message, to reject the session management request message.

In a possible implementation method, the processing unit 710 is specifically configured to: send an authorization request message to an authentication and authorization server through the transceiver unit 720 if the indication information indicates that the terminal is allowed to execute the unmanned flight service if the flight type of the terminal is the manned type, and the flight type of the terminal is the manned type, where the authorization request message is for requesting authorization of the unmanned flight service of the terminal; receive an authorization response message from the authentication and authorization server through the transceiver unit 720, where the authorization response message indicates that the authorization succeeds; and determine, based on the authorization response message, to accept the session management request message.

In a possible implementation method, the transceiver unit 720 is specifically configured to receive the session management request message and the indication information from a mobility management network element.

In a third embodiment, the communication apparatus is configured to implement a function of the foregoing AMF or SMF: The transceiver unit 720 is configured to: send an authentication and authorization request message to an authentication and authorization server, where the authentication and authorization request message is for requesting authentication and authorization of a terminal, and the terminal is an urban air vehicle; receive an authentication and authorization response message from the authentication and authorization server, where the authentication and authorization response message includes indication information, and the indication information indicates whether the terminal is allowed to execute an unmanned flight service; and receive a non-access stratum NAS message from the terminal. The processing unit 710 is configured to send, to the terminal based on the indication information through the transceiver unit 720, a response message of rejecting or accepting the NAS message.

In a possible implementation method, the response message of rejecting the NAS message includes a cause value, and the cause value is that the unmanned flight service is prohibited.

In a possible implementation method, the processing unit 710 is specifically configured to determine, based on the indication information, to reject or accept the NAS message.

In a possible implementation method, the processing unit 710 is specifically configured to: determine, if the indication information indicates that the terminal is not allowed to execute the unmanned flight service, to reject the NAS message.

In a possible implementation method, the processing unit 710 is specifically configured to: send an authorization request message to the authentication and authorization server through the transceiver unit 720 if the indication information indicates that the terminal is allowed to execute the unmanned flight service, where the authorization request message is for requesting authorization of the unmanned flight service of the terminal; receive an authorization response message from the authentication and authorization server through the transceiver unit 720, where the authorization response message indicates that the authorization fails; and determine, based on the authorization response message, to reject the NAS message.

In a possible implementation method, the processing unit 710 is specifically configured to: send an authorization request message to the authentication and authorization server through the transceiver unit 720 if the indication information indicates that the terminal is allowed to execute the unmanned flight service, where the authorization request message is for requesting authorization of the unmanned flight service of the terminal; receive an authorization response message from the authentication and authorization server through the transceiver unit 720, where the authorization response message indicates that the authorization succeeds; and determine, based on the authorization response message, to accept the NAS message.

In a possible implementation method, that the indication information indicates whether the terminal is allowed to execute the unmanned flight service includes: The indication information indicates whether the terminal is allowed to execute the unmanned flight service if a flight type of the terminal is a manned type.

In a possible implementation method, the processing unit 710 is specifically configured to determine to reject the NAS message if the indication information indicates that the terminal is not allowed to execute the unmanned flight service if the flight type of the terminal is the manned type, and the flight type of the terminal is the manned type.

In a possible implementation method, the processing unit 710 is specifically configured to: send an authorization request message to the authentication and authorization server through the transceiver unit 720 if the indication information indicates that the terminal is allowed to execute the unmanned flight service if the flight type of the terminal is the manned type, and the flight type of the terminal is the manned type, where the authorization request message is for requesting authorization of the unmanned flight service of the terminal; receive an authorization response message from the authentication and authorization server through the transceiver unit 720, where the authorization response message indicates that the authorization fails; and determine, based on the authorization response message, to reject the NAS message.

In a possible implementation method, the processing unit 710 is specifically configured to: send an authorization request message to the authentication and authorization server through the transceiver unit 720 if the indication information indicates that the terminal is allowed to execute the unmanned flight service if the flight type of the terminal is the manned type, and the flight type of the terminal is the manned type, where the authorization request message is for requesting authorization of the unmanned flight service of the terminal; receive an authorization response message from the authentication and authorization server through the transceiver unit 720, where the authorization response message indicates that the authorization succeeds; and determine, based on the authorization response message, to accept the NAS message.

In a possible implementation method, the NAS message is a session management request message, and the session management request message is for requesting establishment of a session for the unmanned flight service.

For more detailed descriptions of the processing unit 710 and the transceiver unit 720, directly refer to related descriptions in the foregoing method embodiment. Details are not described herein again.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions to be executed by the processor 810, store input data required for running the instructions by the processor 810, or store data generated after the processor 810 runs the instructions.

When the communication apparatus 800 is configured to implement the foregoing method embodiments, the processor 810 is configured to implement a function of the foregoing processing unit 710, and the interface circuit 820 is configured to implement a function of the foregoing transceiver unit 720.

It may be understood that, the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner or may be implemented in a manner of executing a software instruction by a processor. The software instruction may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a base station or a terminal. Certainly, the processor and the storage medium may exist in the base station or the terminal as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a base station, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired or wireless manner. The computer-readable storage medium may be any usable medium accessible by the computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. And/or describes an association relationship between associated objects, and represents that three relationships may exist. For example, A and/or B may represent the following cases: Only A exists, both A and B exist, and only B exists, where A and B may be singular or plural. In the text description of this application, the character "/" generally indicates that the associated objects are in an "or" relationship. In the formula of this application, the character "/" indicates that the associated objects are in a "division" relationship.

It may be understood that numerical symbols involved in embodiments of this application are differentiated merely for ease of description, but are not used to limit the scope of embodiments of this application. Sequence numbers of the foregoing processes do not mean execution sequences. The execution sequences of the processes should be determined according to functions and internal logic of the processes.

## Claims

1. A communication method, comprising:
receiving a non-access stratum NAS message from a terminal, wherein the terminal is an urban air vehicle; and
sending, to the terminal based on subscription information of the terminal, a response message of rejecting or accepting the NAS message, wherein the subscription information indicates whether the terminal is allowed to execute an unmanned flight service.

2. The method according to claim 1, wherein the method further comprises:
requesting the subscription information of the terminal from a subscription data management network element; and
receiving the subscription information from the subscription data management network element.

3. The method according to claim 1 or 2, wherein the response message of rejecting the NAS message comprises a cause value, and the cause value is that the unmanned flight service is prohibited.

4. The method according to any one of claims 1 to 3, wherein the method further comprises:
determining, based on the subscription information, to reject or accept the NAS message.

5. The method according to claim 4, wherein the determining, based on the subscription information, to reject the NAS message comprises:
determining to reject the NAS message if the subscription information indicates that the terminal is not allowed to execute the unmanned flight service.

6. The method according to claim 4, wherein the determining, based on the subscription information, to reject the NAS message comprises:
sending an authorization request message to an authentication and authorization server if the subscription information indicates that the terminal is allowed to execute the unmanned flight service, wherein the authorization request message is for requesting authorization of the unmanned flight service of the terminal;
receiving an authorization response message from the authentication and authorization server, wherein the authorization response message indicates that the authorization fails; and
determining, based on the authorization response message, to reject the NAS message.

7. The method according to claim 4, wherein the determining, based on the subscription information, to accept the NAS message comprises:
sending an authorization request message to an authentication and authorization server if the subscription information indicates that the terminal is allowed to execute the unmanned flight service, wherein the authorization request message is for requesting authorization of the unmanned flight service of the terminal;
receiving an authorization response message from the authentication and authorization server, wherein the authorization response message indicates that the authorization succeeds; and
determining, based on the authorization response message, to accept the NAS message.

8. The method according to claim 4, wherein that the subscription information indicates whether the terminal is allowed to execute an unmanned flight service comprises:
the subscription information indicates whether the terminal is allowed to execute the unmanned flight service if a flight type of the terminal is a manned type.

9. The method according to claim 8, wherein the determining, based on the subscription information, to reject the NAS message comprises:
determining to reject the NAS message if the subscription information indicates that the terminal is not allowed to execute the unmanned flight service if the flight type of the terminal is the manned type, and the flight type of the terminal is the manned type.

10. The method according to claim 8, wherein the determining, based on the subscription information, to reject the NAS message comprises:
sending an authorization request message to an authentication and authorization server if the subscription information indicates that the terminal is allowed to execute the unmanned flight service if the flight type of the terminal is the manned type, and the flight type of the terminal is the manned type, wherein the authorization request message is for requesting authorization of the unmanned flight service of the terminal;
receiving an authorization response message from the authentication and authorization server, wherein the authorization response message indicates that the authorization fails; and
determining, based on the authorization response message, to reject the NAS message.

11. The method according to claim 8, wherein the determining, based on the subscription information, to accept the NAS message comprises:
sending an authorization request message to an authentication and authorization server if the subscription information indicates that the terminal is allowed to execute the unmanned flight service if the flight type of the terminal is the manned type, and the flight type of the terminal is the manned type, wherein the authorization request message is for requesting authorization of the unmanned flight service of the terminal;
receiving an authorization response message from the authentication and authorization server, wherein the authorization response message indicates that the authorization succeeds; and
determining, based on the authorization response message, to accept the NAS message.

12. The method according to any one of claims 1 to 11, wherein the NAS message is a session management request message, and the session management request message is for requesting establishment of a session for the unmanned flight service.

13. A communication method, comprising:
receiving a session management request message and indication information, wherein the session management request message is for requesting establishment of a session for an unmanned flight service, the indication information indicates whether a terminal is allowed to execute the unmanned flight service, and the terminal is an urban air vehicle; and
sending, based on the indication information, a response message of rejecting or accepting the session management request message to the terminal.

14. The method according to claim 13, wherein the response message of rej ecting the session management request message comprises a cause value, and the cause value is that the unmanned flight service is prohibited.

15. The method according to claim 13 or 14, wherein the method further comprises:
determining, based on the indication information, to reject or accept the session management request message.

16. The method according to claim 15, wherein the determining, based on the indication information, to reject the session management request message comprises:
determining to reject the session management request message if the indication information indicates that the terminal is not allowed to execute the unmanned flight service.

17. The method according to claim 15, wherein the determining, based on the indication information, to reject the session management request message comprises:
sending an authorization request message to an authentication and authorization server if the indication information indicates that the terminal is allowed to execute the unmanned flight service, wherein the authorization request message is for requesting authorization of the unmanned flight service of the terminal;
receiving an authorization response message from the authentication and authorization server, wherein the authorization response message indicates that the authorization fails; and
determining, based on the authorization response message, to reject the session management request message.

18. The method according to claim 15, wherein the determining, based on the indication information, to accept the session management request message comprises:
sending an authorization request message to an authentication and authorization server if the indication information indicates that the terminal is allowed to execute the unmanned flight service, wherein the authorization request message is for requesting authorization of the unmanned flight service of the terminal;
receiving an authorization response message from the authentication and authorization server, wherein the authorization response message indicates that the authorization succeeds; and
determining, based on the authorization response message, to accept the session management request message.

19. The method according to claim 15, wherein that the indication information indicates whether a terminal is allowed to execute the unmanned flight service comprises:
the indication information indicates whether the terminal is allowed to execute the unmanned flight service if a flight type of the terminal is a manned type.

20. The method according to claim 19, wherein the determining, based on the indication information, to reject the session management request message comprises:
determining to reject the session management request message if the indication information indicates that the terminal is not allowed to execute the unmanned flight service if the flight type of the terminal is the manned type, and the flight type of the terminal is the manned type.

21. The method according to claim 19, wherein the determining, based on the indication information, to reject the session management request message comprises:
sending an authorization request message to an authentication and authorization server if the indication information indicates that the terminal is allowed to execute the unmanned flight service if the flight type of the terminal is the manned type, and the flight type of the terminal is the manned type, wherein the authorization request message is for requesting authorization of the unmanned flight service of the terminal;
receiving an authorization response message from the authentication and authorization server, wherein the authorization response message indicates that the authorization fails; and
determining, based on the authorization response message, to reject the session management request message.

22. The method according to claim 19, wherein the determining, based on the indication information, to accept the session management request message comprises:
sending an authorization request message to an authentication and authorization server if the indication information indicates that the terminal is allowed to execute the unmanned flight service if the flight type of the terminal is the manned type, and the flight type of the terminal is the manned type, wherein the authorization request message is for requesting authorization of the unmanned flight service of the terminal;
receiving an authorization response message from the authentication and authorization server, wherein the authorization response message indicates that the authorization succeeds; and
determining, based on the authorization response message, to accept the session management request message.

23. The method according to any one of claims 13 to 22, wherein the receiving a session management request message and indication information comprises:
receiving the session management request message and the indication information from a mobility management network element.

24. A communication method, comprising:
sending an authentication and authorization request message to an authentication and authorization server, wherein the authentication and authorization request message is for requesting authentication and authorization of a terminal, and the terminal is an urban air vehicle;
receiving an authentication and authorization response message from the authentication and authorization server, wherein the authentication and authorization response message comprises indication information, and the indication information indicates whether the terminal is allowed to execute an unmanned flight service;
receiving a non-access stratum NAS message from the terminal; and
sending, to the terminal based on the indication information, a response message of rejecting or accepting the NAS message.

25. The method according to claim 24, wherein the response message of rejecting the NAS message comprises a cause value, and the cause value is that the unmanned flight service is prohibited.

26. The method according to claim 24 or 25, wherein the method further comprises:
determining, based on the indication information, to reject or accept the NAS message.

27. The method according to claim 26, wherein the determining, based on the indication information, to reject the NAS message comprises:
determining to reject the NAS message if the indication information indicates that the terminal is not allowed to execute the unmanned flight service.

28. The method according to claim 26, wherein the determining, based on the indication information, to reject the NAS message comprises:
sending an authorization request message to the authentication and authorization server if the indication information indicates that the terminal is allowed to execute the unmanned flight service, wherein the authorization request message is for requesting authorization of the unmanned flight service of the terminal;
receiving an authorization response message from the authentication and authorization server, wherein the authorization response message indicates that the authorization fails; and
determining, based on the authorization response message, to reject the NAS message.

29. The method according to claim 26, wherein the determining, based on the indication information, to accept the NAS message comprises:
sending an authorization request message to the authentication and authorization server if the indication information indicates that the terminal is allowed to execute the unmanned flight service, wherein the authorization request message is for requesting authorization of the unmanned flight service of the terminal;
receiving an authorization response message from the authentication and authorization server, wherein the authorization response message indicates that the authorization succeeds; and
determining, based on the authorization response message, to accept the NAS message.

30. The method according to claim 26, wherein that the indication information indicates whether a terminal is allowed to execute the unmanned flight service comprises:
the indication information indicates whether the terminal is allowed to execute the unmanned flight service if a flight type of the terminal is a manned type.

31. The method according to claim 30, wherein the determining, based on the indication information, to reject the NAS message comprises:
determining to reject the NAS message if the indication information indicates that the terminal is not allowed to execute the unmanned flight service if the flight type of the terminal is the manned type, and the flight type of the terminal is the manned type.

32. The method according to claim 30, wherein the determining, based on the indication information, to reject the NAS message comprises:
sending an authorization request message to the authentication and authorization server if the indication information indicates that the terminal is allowed to execute the unmanned flight service if the flight type of the terminal is the manned type, and the flight type of the terminal is the manned type, wherein the authorization request message is for requesting authorization of the unmanned flight service of the terminal;
receiving an authorization response message from the authentication and authorization server, wherein the authorization response message indicates that the authorization fails; and
determining, based on the authorization response message, to reject the NAS message.

33. The method according to claim 30, wherein the determining, based on the indication information, to accept the NAS message comprises:
sending an authorization request message to the authentication and authorization server if the indication information indicates that the terminal is allowed to execute the unmanned flight service if the flight type of the terminal is the manned type, and the flight type of the terminal is the manned type, wherein the authorization request message is for requesting authorization of the unmanned flight service of the terminal;
receiving an authorization response message from the authentication and authorization server, wherein the authorization response message indicates that the authorization succeeds; and
determining, based on the authorization response message, to accept the NAS message.

34. The method according to any one of claims 24 to 33, wherein the NAS message is a session management request message, and the session management request message is for requesting establishment of a session for the unmanned flight service.

35. A communication apparatus, comprising a module configured to perform the method according to any one of claims 1 to 12, or a module configured to perform the method according to any one of claims 13 to 23, or a module configured to perform the method according to any one of claims 24 to 34.

36. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement, by using a logic circuit or executing a code instruction, the method according to any one of claims 1 to 12, or the method according to any one of claims 13 to 23, or the method according to any one of claims 24 to 34.

37. A communication apparatus, comprising a processor, wherein the processor is coupled to a memory, the memory is configured to store a program or instructions, and when the program or the instructions are executed by the processor, the apparatus is enabled to perform the communication method according to any one of claims 1 to 12, or perform the communication method according to any one of claims 13 to 23, or perform the communication method according to any one of claims 24 to 34.

38. A computer program product, comprising a computer program, wherein when the computer program is executed by a communication apparatus, the method according to any one of claims 1 to 34 is implemented.

39. A computer-readable storage medium, wherein the storage medium stores a computer program or instructions, and when the computer program or the instructions are executed by a communication apparatus, the method according to any one of claims 1 to 34 is implemented.
